(19) **Europäisches Patentamt European Patent Office Office européen des brevets**

(11) **EP 3 109 934 B1**

(12) **FASCICULE DE BREVET EUROPEEN**

(45) Date de publication et mention de la délivrance du brevet:
**02.05.2018 Bulletin 2018/18**

(51) Int Cl.:
*H01M 8/249* (2016.01)    *H01M 8/04119* (2016.01)
*H01M 8/04082* (2016.01)    *H01M 8/2484* (2016.01)

(21) Numéro de dépôt: **16176013.7**

(22) Date de dépôt: **23.06.2016**

(54) **PROCÉDÉ D'ALIMENTATION D'UNE PILE A COMBUSTIBLE A PHASES D ALIMENTATION ET DE PURGE ALTERNEES**

SPEISUNGSVERFAHREN EINER BRENNSTOFFZELLE MIT ABWECHSELNDEN EINSPEISE- UND ABLASSPHASEN

METHOD FOR SUPPLYING A FUEL CELL WITH ALTERNATING SUPPLY AND PURGE PHASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2015 FR 1555884**

(43) Date de publication de la demande:
**28.12.2016 Bulletin 2016/52**

(73) Titulaire: **Commissariat à l'énergie atomique et aux énergies alternatives 75015 Paris (FR)**

(72) Inventeurs:
- **POIROT-CROUVEZIER, Jean-Philippe 38450 SAINT GEORGES DE COMMIERS (FR)**
- **BUZON, Didier 38000 GRENOBLE (FR)**
- **MICOUD, Fabrice 38500 LA BUISSE (FR)**
- **VINCENT, Rémi 38000 GRENOBLE (FR)**

(74) Mandataire: **GIE Innovation Competence Group 310, avenue Berthelot 69372 Lyon Cedex 08 (FR)**

(56) Documents cités:
**WO-A1-2012/152623    US-B1- 6 821 668**

**Description**

## DOMAINE TECHNIQUE

Le domaine de l'invention est celui des piles à combustible et plus particulièrement celui de la gestion de l'alimentation des piles à combustible en gaz carburant et/ou comburant. L'invention s'applique notamment à l'alimentation des cathodes d'une pile à hydrogène en air atmosphérique contenant de l'oxygène.

## ÉTAT DE LA TECHNIQUE ANTÉRIEURE

Une pile à combustible est formée d'un empilement de cellules électrochimiques, comportant chacune une anode et une cathode séparées électriquement l'une de l'autre par un électrolyte, dans lesquelles a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène) par exemple contenu dans de l'air, est amené au contact de la cathode. La réaction est subdivisée en deux demi-réactions, une oxydation et une réduction, qui ont lieu l'une à l'interface anode/électrolyte et l'autre à l'interface cathode/électrolyte. Elle requiert la présence d'un conducteur ionique entre les deux électrodes, à savoir l'électrolyte, et un conducteur électronique formé par le circuit électrique externe. L'empilement de cellules est le lieu de la réaction électrochimique : les réactifs doivent y être apportés, les produits et les espèces non réactives doivent en être évacués, ainsi que la chaleur produite.

En sortie de pile, deux configurations se rencontrent habituellement. Dans un premier cas correspondant à un fonctionnement dit en mode ouvert, les sorties d'anode et de cathode communiquent avec un conduit d'évacuation des fluides. Ainsi, lorsqu'on alimente la pile en sur-stoechiométrie (rapport entre la quantité de réactif injecté et la quantité de réactif consommé supérieur à 1), le gaz sortant présente un débit suffisant pour évacuer l'eau produite par la réaction, qui peut ensuite être collectée à l'aide d'un séparateur de phase. Pour éviter de perdre le réactif non consommé, un dispositif de recirculation est habituellement prévu, qui réinjecte le réactif non consommé en entrée de pile. Cependant, du fait de la recirculation fluidique, les espèces non réactives, tel que l'azote à l'anode dans le cas d'une alimentation en air à la cathode, voient leur concentration molaire augmenter progressivement, ce qui nécessite d'effectuer régulièrement une étape de purge de la cellule.

Dans un deuxième cas correspondant à un fonctionnement dit en mode bouché (*dead end,* en anglais), la sortie de l'anode est obturée, ainsi que, le cas échéant, celle de la cathode, et la pile est alimentée en réactifs avec un rapport stoechiométrique sensiblement égal à 1. Ainsi, la quantité d'hydrogène introduit à l'anode correspond à la quantité consommée lors de la réaction. Dans ce cas, les espèces non réactives et l'eau liquide produite ne sont pas évacuées, ce qui conduit à une augmentation progressive de leur concentration molaire dans la cellule. Il est alors nécessaire de procéder régulièrement à une étape de purge de la cellule, pour en évacuer les espèces non réactives et l'eau liquide.

La perméation d'azote et le passage d'eau produite au travers de l'électrolyte entre le côté cathode et le côté anode sont les principales raisons pour lesquelles l'un de ces deux modes de fonctionnement doit être appliqué à l'anode. La recirculation est le mode qui permet la meilleure homogénéisation du mélange gazeux à l'anode, et par conséquent le plus faible taux de purge et de perte d'hydrogène. En revanche, il s'agit du mode le plus complexe à mettre en place et à piloter. La situation est similaire à la cathode lorsqu'elle est alimentée en oxygène sensiblement pur.

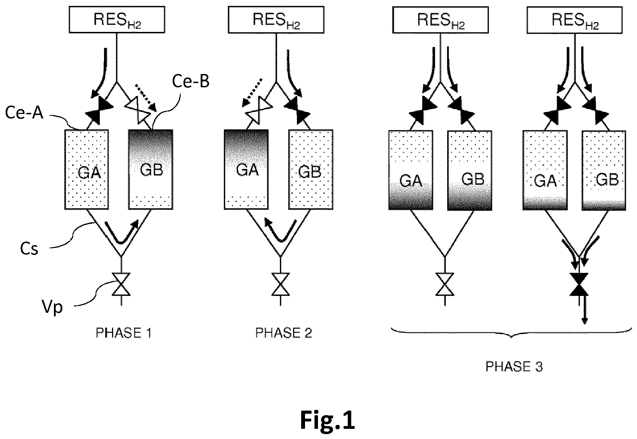

La figure 1 illustre un exemple de procédé d'alimentation d'une pile à combustible tel que décrit dans le document WO2012/152623, qui permet d'éviter l'utilisation d'une recirculation tout en améliorant l'homogénéisation du mélange gazeux. Dans cet exemple, la pile 1 comporte un empilement de cellules électrochimiques réparties en deux groupes distincts, A et B, les groupes de cellules étant alimentés sélectivement en espèce réactive, ici en hydrogène.

Lors d'une première étape (phase 1), on alimente en hydrogène seulement un premier groupe de cellules, ici le groupe A, et pas le groupe B, et l'hydrogène non consommée circule toutefois entre les deux groupes par l'intermédiaire d'un collecteur de sortie Cs commun aux cellules des deux groupes. Ainsi, apparaît un gradient de concentration molaire en espèce réactive le long du chemin fluidique, à partir d'une valeur maximale en entrée du groupe A (au niveau du collecteur d'entrée Ce-A) jusqu'à une valeur minimale en sortie du groupe B (ici au niveau du collecteur d'entrée Ce-B). Les cellules du groupe B présentent donc une zone d'accumulation d'espèces non réactives et d'eau liquide (partie grisée sur la fig.1) située au niveau de l'extrémité du chemin fluidique.

Lors d'une deuxième étape (phase 2), on inverse l'alimentation des deux groupes, de manière à alimenter le groupe B et non pas le groupe A. Le réactif non consommé dans le groupe B circule entre les deux groupes par l'intermédiaire du collecteur de sortie Cs commun. Ainsi, de manière similaire à la phase 1, les cellules du groupe A présentent une zone d'accumulation d'espèces non réactives et d'eau liquide située au niveau de l'extrémité du chemin fluidique, ici le collecteur d'entrée Ce-A.

L'alternance entre les deux étapes réalise un brassage, dans les cellules de la pile, des espèces non réactives et des produits de la réaction, ce qui permet d'éviter que la zone d'accumulation ne stagne au niveau des mêmes cellules.

Lors d'une troisième étape (phase 3), effectuée après une série d'alternances entre les deux étapes d'alimentation, les cellules des groupes A et B sont purgées. Pour cela, on alimente simultanément les deux groupes en gardant fermée une vanne de purge Vp reliant le collecteur de sortie commun Cs à un orifice de sortie, puis en ouvrant la vanne Vp. Cette étape de purge permet d'évacuer les espèces non réactives et l'eau liquide qui s'accumulent dans les deux groupes au cours des étapes d'alimentation.

Cependant, ce procédé d'alimentation peut présenter l'inconvénient, en particulier lorsqu'il est appliqué à l'alimentation de la pile en fluide réactif dilué comme c'est le cas par exemple pour l'alimentation des cathodes avec de l'air atmosphérique, d'impacter les performances électriques ou électrochimiques de la pile.

## EXPOSÉ DE L'INVENTION

L'invention a pour objectif de remédier au moins en partie aux inconvénients de l'art antérieur, et plus particulièrement de proposer un procédé d'alimentation en espèce réactive d'une pile à combustible dont l'impact sur les performances électriques ou électrochimiques de la pile est minimisé.

L'invention propose à cet effet un procédé d'alimentation d'une pile à combustible en espèce réactive, la pile comportant un empilement de cellules électrochimiques réparties en N groupes distincts de cellules, N≥2, dans lequel :

- on effectue une pluralité d'étapes d'alimentation sélective des N groupes de cellules en espèce réactive, au cours desquelles on alimente un premier groupe de cellules, l'espèce réactive non consommée dans le premier groupe circulant dans les autres groupes par l'intermédiaire de lignes de distribution assurant la communication fluidique des groupes entre eux et étant agencés de manière à former, avec les N groupes, un chemin fluidique pour l'espèce réactive, allant du premier groupe alimenté jusqu'à un ou plusieurs derniers groupes formant l'extrémité du chemin fluidique.

Selon l'invention, à la suite de chacune des étapes d'alimentation, on effectue une étape de purge des N groupes de cellules au cours de laquelle on alimente simultanément chacun des groupes en espèce réactive, chaque groupe communiquant avec un orifice de sortie de la pile permettant l'évacuation fluidique des N groupes de cellules.

L'espèce réactive est diluée dans un gaz porteur. De plus, le premier groupe alimenté est différent d'une étape d'alimentation à l'autre, c'est-à-dire entre deux étapes d'alimentation successives.

Certains aspects préférés mais non limitatifs de ce procédé d'alimentation sont les suivants :

Les lignes de distribution fluidique peuvent être agencées vis-à-vis des groupes de sorte que le sens d'écoulement fluidique de l'espèce réactive dans un dernier groupe lors d'une étape d'alimentation est identique au sens d'écoulement fluidique dans le même groupe lors de l'étape de purge suivante.

Les lignes de distribution fluidique peuvent être agencées vis-à-vis des groupes de sorte que le sens d'écoulement fluidique de l'espèce réactive dans chacun des N groupes lors d'une étape d'alimentation est identique au sens d'écoulement fluidique dans les mêmes groupes lors de l'étape de purge suivante.

Les lignes de distribution fluidique peuvent être agencées vis-à-vis des groupes de sorte que le sens d'écoulement fluidique de l'espèce réactive dans le ou les derniers groupes lors d'une étape de purge est identique au sens d'écoulement fluidique dans le ou les mêmes groupes lors d'une étape d'alimentation suivante.

Les lignes de distribution fluidique peuvent être agencées vis-à-vis des groupes de sorte que le sens d'écoulement fluidique de l'espèce réactive dans chacun des groupes lors d'une étape de purge est identique au sens d'écoulement fluidique dans chacun des mêmes groupes lors d'une étape d'alimentation suivante.

Les cellules peuvent comporter chacune une anode et une cathode, les cathodes et/ou les anodes de l'empilement de cellules étant alimentées en espèce réactive diluée dans un fluide porteur.

Selon un mode de réalisation, les cathodes sont alimentées en air atmosphérique contenant de l'oxygène.

Lors de ladite étape de purge, le débit molaire en espèce réactive en entrée des groupes de cellules peut être différent entre au moins deux desdits groupes.

Lors de ladite étape de purge, le débit molaire en espèce réactive en entrée d'un groupe de cellules, celui-ci étant un dernier groupe lors de l'étape d'alimentation précédente, peut être supérieur à celui d'au moins un autre groupe.

L'invention porte également sur une pile à combustible, comportant :

- un orifice d'entrée pour permettre l'alimentation de la pile en espèce réactive diluée dans un gaz porteur, et un orifice de sortie pour permettre l'évacuation de fluide hors de la pile ;
- un empilement de cellules électrochimiques réparties en N groupes distincts de cellules, N≥2, chaque groupe de cellules comportant un collecteur d'entrée pour amener l'espèce réactive diluée dans un gaz réactif dans les cellules du groupe et un collecteur de sortie pour évacuer du fluide circulant dans les cellules ;
- des lignes d'alimentation fluidique adaptées à alimenter sélectivement les N groupes de cellules, reliant l'orifice d'entrée à chacun des collecteurs d'entrée, et comportant au moins un commutateur sélectif pour autoriser ou bloquer l'écoulement entre l'orifice d'entrée vers chacun des collecteurs d'entrée et ainsi alimenter un premier groupe différent d'une étape d'alimentation à l'autre ;

- des lignes de distribution fluidique adaptées à assurer la communication fluidique des groupes entre eux et agencés de manière à former, avec les N groupes, un chemin fluidique pour l'espèce réactive, allant d'un premier groupe destiné à être alimenté en espèce réactive jusqu'à un ou plusieurs derniers groupes formant l'extrémité du chemin fluidique ;
- des lignes de purge reliant le ou les collecteurs de sortie à l'orifice de sortie et comprenant au moins un commutateur pour autoriser ou bloquer l'écoulement entre le ou les collecteurs de sortie et l'orifice de sortie.

Selon l'invention, la pile à combustible comporte un dispositif d'évacuation reliant le dernier groupe, ou au moins l'un des derniers groupes, à l'orifice de sortie et adapté à permettre l'évacuation d'un fluide présent à l'intérieur de celui-ci.

Les groupes de cellules peuvent comporter un collecteur de sortie commun permettant la communication fluidique des cellules de tous les groupes entre elles, les lignes de distribution fluidique étant formées du collecteur de sortie commun de sorte que le premier groupe est relié en série avec les autres groupes, ceux-ci étant fluidiquement disposés en parallèle les uns aux autres formant ainsi plusieurs derniers groupes, le dispositif d'évacuation comportant au moins un conduit d'évacuation reliant le collecteur d'entrée d'un dernier groupe à l'orifice de sortie.

Chacun des N groupes peut comporter un collecteur de sortie, ceux-ci étant distincts les uns des autres, les lignes de distribution fluidique comportant des conduits de distribution reliant fluidiquement les groupes en série, du premier groupe jusqu'à un dernier groupe, le dispositif d'évacuation comportant au moins un conduit d'évacuation reliant le dernier groupe à l'orifice de sortie.

Le dispositif d'évacuation peut comporter N conduits d'évacuation reliant chaque collecteur de sortie à l'orifice de sortie et munis chacun d'une vanne de purge.

Les cellules des différents groupes peuvent être empilées de manière imbriquée dans un même empilement, de sorte qu'une cellule d'un groupe est adjacente d'une cellule d'un autre groupe de l'empilement.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 déjà décrite précédemment :

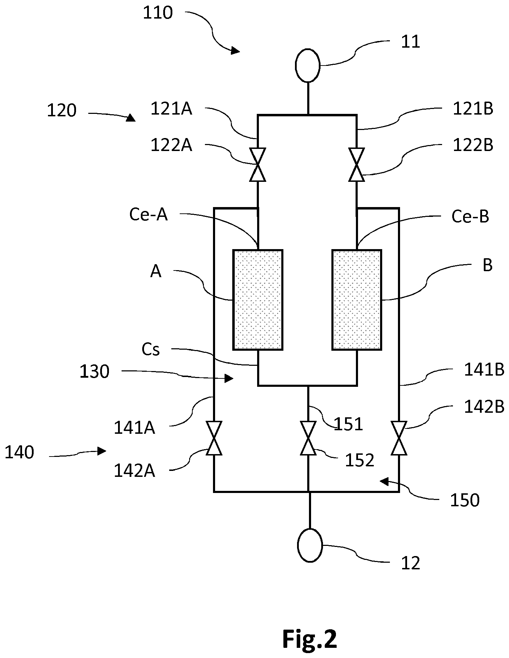

la figure 2 est un schéma de principe d'une pile à combustible selon un premier mode de réalisation comportant un empilement de cellules électrochimiques réparties en plusieurs groupes distincts et comportant un collecteur de sortie commun à toutes les cellules de l'empilement ;

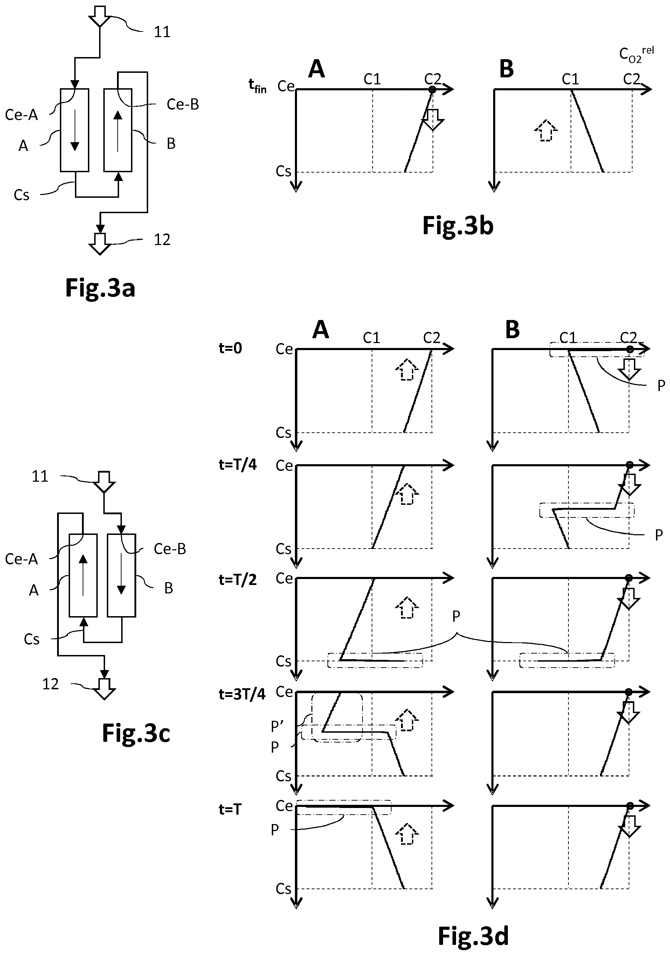

la figure 3a est une représentation schématique de la pile à combustible selon le premier mode de réalisation lors d'une première étape d'alimentation ; et la figure 3b est un diagramme illustrant la répartition spatiale de la fraction molaire d'espèce réactive dans les groupes de la pile illustrée en figure 3a, lors de la première étape d'alimentation en régime permanent ;

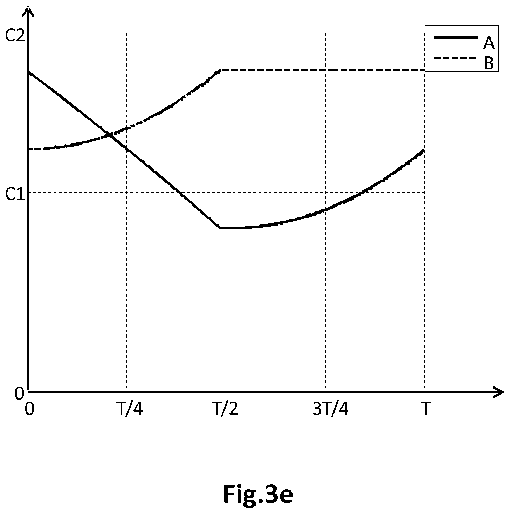

la figure 3c est une représentation schématique de la pile à combustible selon le premier mode de réalisation lors d'une seconde étape d'alimentation faisant directement suite à la première étape d'alimentation ; la figure 3d est un diagramme illustrant la répartition spatiale de la fraction molaire d'espèce réactive dans les groupes de la pile illustrée en figure 3c, pour différents instants d'un régime transitoire de la seconde étape d'alimentation; et la figure 3e est un diagramme illustrant l'évolution temporelle de la fraction molaire moyenne d'espèce réactive pour chacun des groupes de la pile lors de ce régime transitoire ;

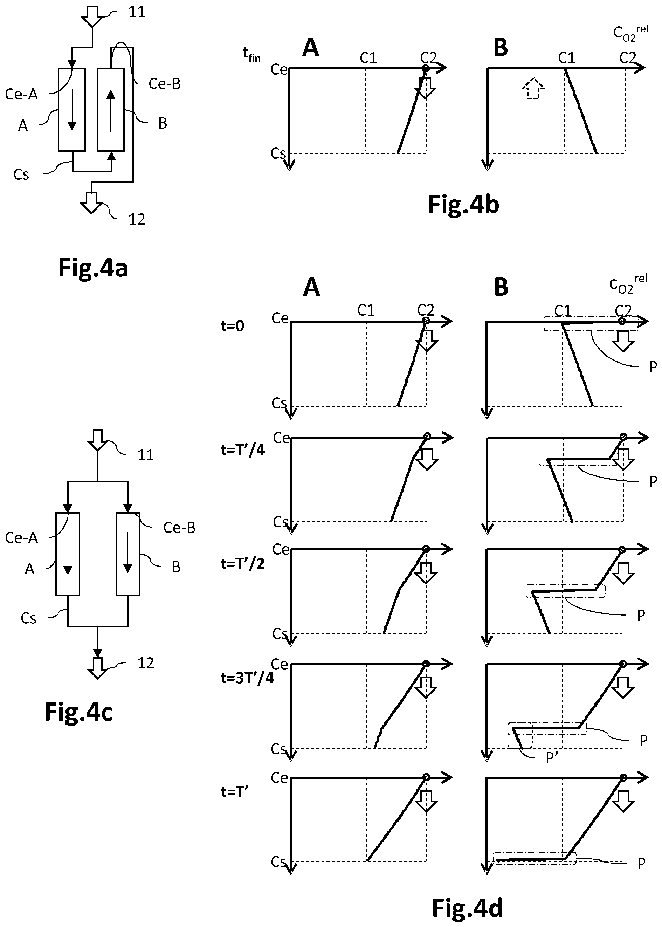

la figure 4a est une représentation schématique de la pile à combustible selon le premier mode de réalisation lors d'une étape d'alimentation ; et la figure 4b est un diagramme illustrant la répartition spatiale de la fraction molaire d'espèce réactive dans les groupes de la pile illustrée en figure 4a, lors de l'étape d'alimentation en régime permanent ;

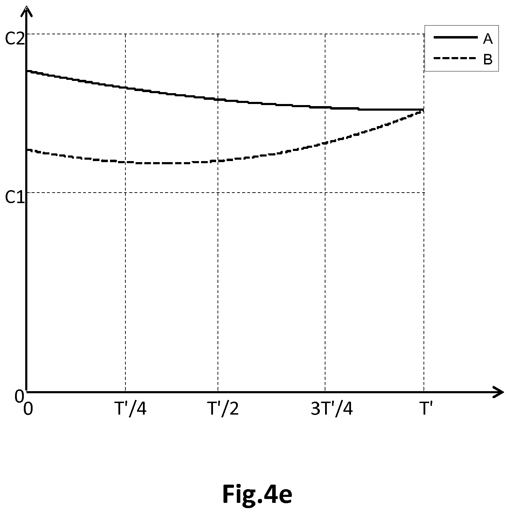

la figure 4c est une représentation schématique de la pile à combustible selon le premier mode de réalisation lors d'une étape de purge faisant directement suite à l'étape d'alimentation ; la figure 4d est un diagramme illustrant la répartition spatiale de la fraction molaire d'espèce réactive dans les groupes de la pile illustrée en figure 4c, pour différents instants d'un régime transitoire de l'étape de purge ; et la figure 4e est un diagramme illustrant l'évolution temporelle de la fraction molaire moyenne d'espèce réactive pour chacun des groupes de la pile lors de ce régime transitoire ;

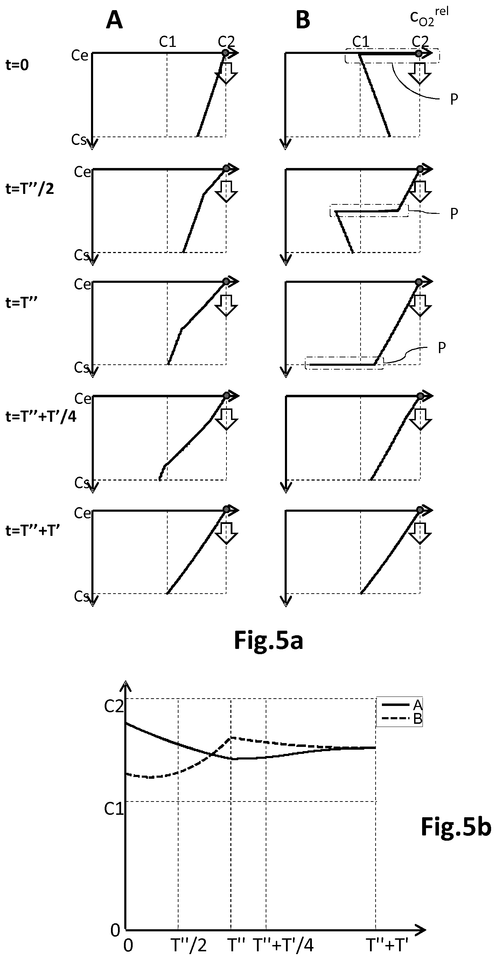

la figure 5a est un diagramme illustrant la répartition spatiale de la fraction molaire d'espèce réactive dans les groupes d'une pile illustrée en figure 4c, pour différents instants d'un régime transitoire de l'étape de purge, où le coefficient de stoechiométrie est différent pour chacun des groupes ; et la figure 5b est un diagramme illustrant l'évolution temporelle de la fraction molaire moyenne d'espèce réactive pour chacun des groupes de la pile lors de ce régime transitoire ;

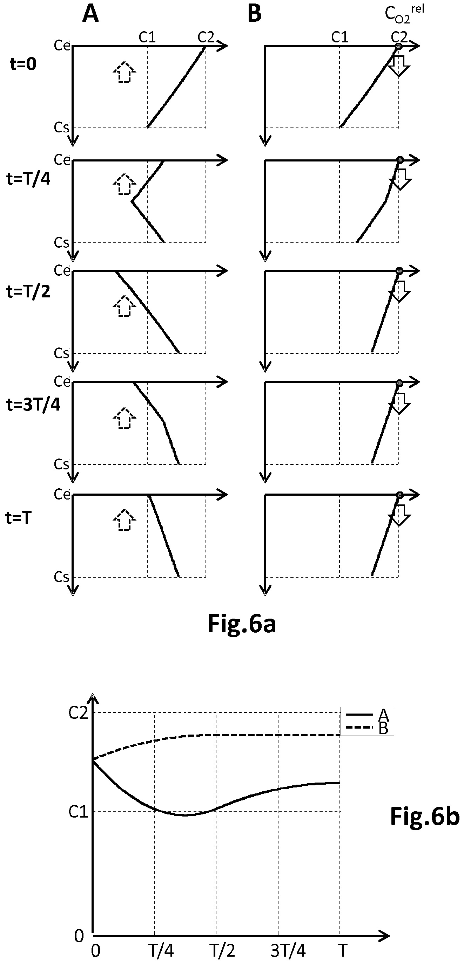

la figure 6a est un diagramme illustrant la répartition spatiale de la fraction molaire d'espèce réactive dans les groupes de la pile, pour différents instants d'un régime transitoire de l'étape d'alimentation faisant suite à l'étape de purge de la figure 4c ; et la figure 6b est un diagramme illustrant l'évolution temporelle de la fraction molaire moyenne d'espèce réactive pour chacun des groupes de la pile lors de ce régime transitoire ;

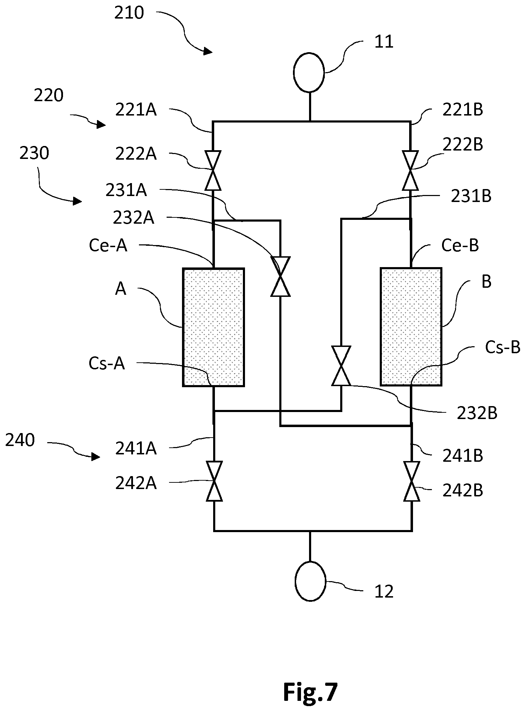

la figure 7 est un schéma de principe d'une pile à combustible selon un second mode de réalisation comportant un empilement de cellules électrochimiques réparties en plusieurs groupes distincts, et comportant des collecteurs de sortie distincts ;

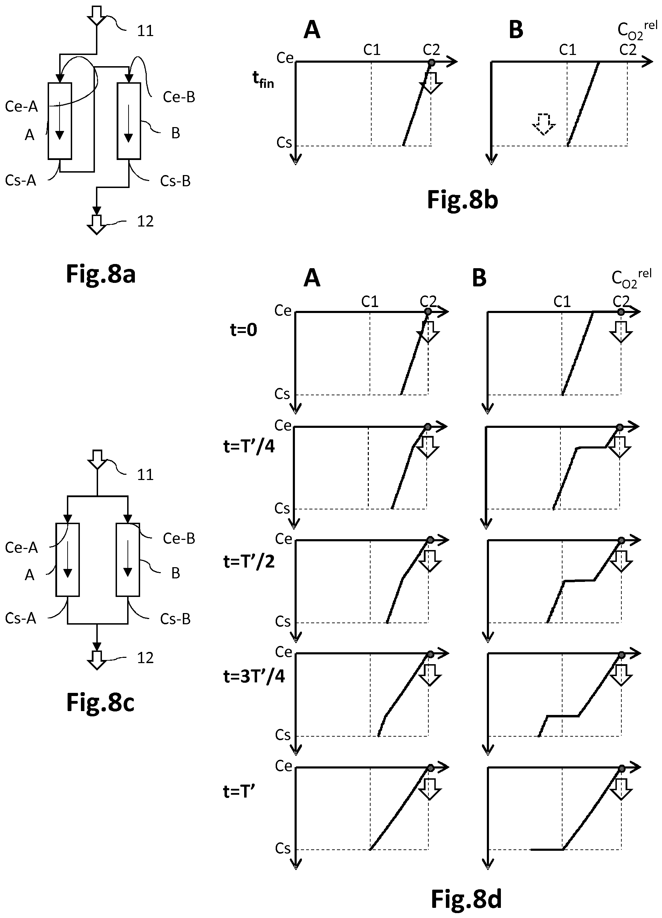

la figure 8a est une représentation schématique de la pile à combustible selon le second mode de réalisation lors d'une étape d'alimentation ; et la figure 8b est un diagramme illustrant la répartition spatiale de la fraction molaire d'espèce réactive dans les groupes de la pile illustrée en figure 8a, lors de l'étape d'alimentation en régime permanent ;

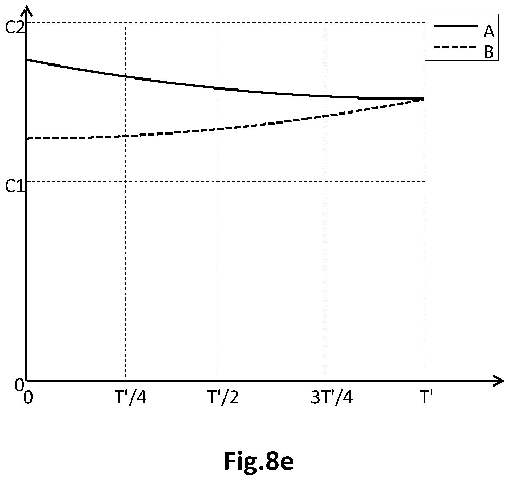

la figure 8c est une représentation schématique de la pile à combustible selon le second mode de réalisation lors d'une étape de purge faisant directement suite à l'étape d'alimentation ; la figure 8d est un diagramme illustrant la répartition spatiale de la fraction molaire d'espèce réactive dans les groupes de la pile illustrée en figure 8c, pour différents instants d'un régime transitoire de l'étape de purge ; et la figure 8e est un diagramme illustrant l'évolution temporelle de la fraction molaire moyenne d'espèce réactive pour chacun des groupes de la pile lors de ce régime transitoire ;

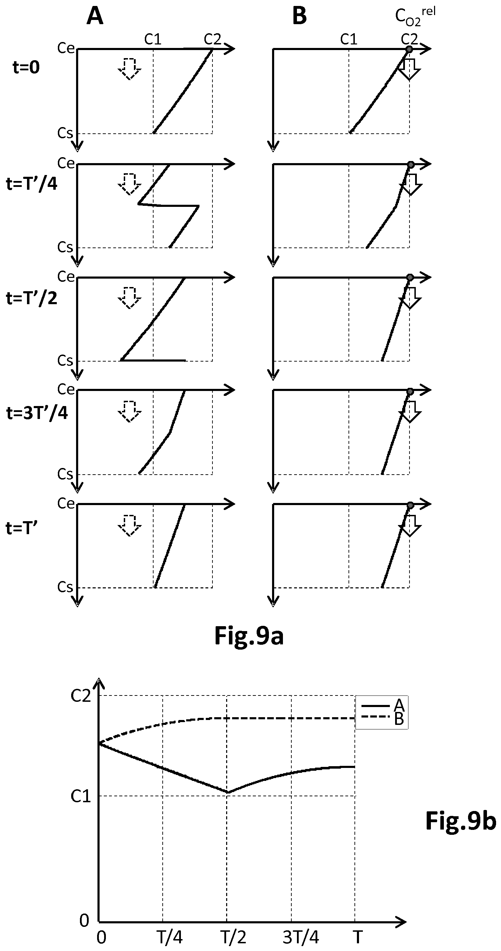

la figure 9a est un diagramme illustrant la répartition spatiale de la fraction molaire d'espèce réactive dans les groupes de la pile, pour différents instants d'un régime transitoire de l'étape d'alimentation faisant suite à l'étape de purge de la figure 8c ; et la figure 9b est un diagramme illustrant l'évolution temporelle de la fraction molaire moyenne d'espèce réactive pour chacun des groupes de la pile lors de ce régime transitoire ;

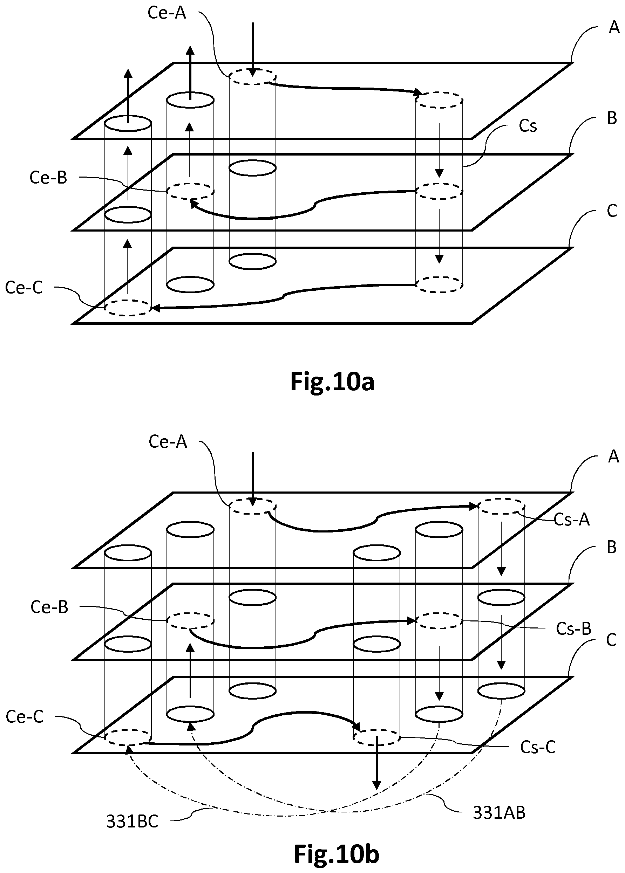

Les figures 10a et 10b sont des vues schématiques en perspective d'un empilement de trois cellules appartenant à trois groupes distincts, comportant un collecteur de sortie commun aux trois groupes (figure 10a) ou des collecteurs de sortie distincts aux trois groupes (figure 10b).

## EXPOSÉ DÉTAILLÉ DE MODES DE RÉALISATION PARTICULIERS

Sur les figures et dans la suite de la description, les mêmes références représentent des éléments identiques ou similaires. De plus, les différents éléments ne sont pas représentés à l'échelle, de manière à privilégier la clarté des figures.

On décrira différents modes de réalisation et variantes en référence à une pile à combustible dont le côté cathode et/ou le côté anode des cellules électrochimiques est alimenté en espèce réactive diluée dans un fluide porteur. Par espèce réactive diluée dans un fluide porteur, on entend que les espèces non réactives et incondensables présentent dans le fluide porteur une fraction molaire sensiblement supérieure à 1%, de préférence supérieure à 10% ou plus. Par exemple, le fluide porteur peut être de l'air atmosphérique comportant une fraction molaire d'oxygène de l'ordre de 20% dans le mélange de gaz incondensable.

On considérera en particulier le côté cathode d'une pile à hydrogène alimenté en air atmosphérique, c'est-à-dire contenant une fraction molaire en oxygène de l'ordre de 20%. D'autres exemples d'alimentation peuvent aussi être concernés par cette invention, comme dans le cas où l'anode est alimentée à partir d'un reformeur d'hydrocarbure. Le mélange gazeux issu de ce réacteur et injecté dans la pile peut alors contenir différentes espèces gazeuses en plus de l'hydrogène, comme le dioxyde de carbone, le monoxyde de carbone, l'azote, dans des proportions dépendantes de l'hydrocarbure et du procédé de transformation utilisé. L'invention s'applique à tout type de pile à combustible, en particulier à celles fonctionnant à basse température, c'est-à-dire à une température inférieure à 200°C.

La figure 2 illustre une pile à combustible 110 selon un premier mode de réalisation. Elle comporte un empilement de cellules électrochimiques réparties en plusieurs groupes distincts, ici en deux groupes A et B. Les cellules sont de préférence identiques les unes aux autres et comportent chacune une anode et une cathode séparées l'une de l'autre par un électrolyte. Les cellules des différents groupes du même empilement peuvent être disposées de manière imbriquées, de sorte qu'une cellule d'un groupe est adjacente à une cellule d'un autre groupe.

Chaque groupe A, B de cellules comporte un collecteur d'entrée Ce-A, Ce-B adapté à permettre l'injection ou l'évacuation de fluide dans les cellules du groupe considéré, et comporte, dans ce mode de réalisation, un collecteur de sortie Cs commun à toutes cellules de l'empilement et adapté à permettre l'injection ou l'évacuation de fluide dans les cellules.

La pile 110 comporte un orifice d'entrée 11 permettant l'alimentation des cellules en espèce réactive et un orifice de sortie 12 permettant l'évacuation de fluide hors des cellules. Le fluide comportant l'espèce réactive injecté au niveau de l'orifice d'entrée est appelé fluide d'alimentation. Dans cet exemple, le fluide d'alimentation injecté aux cathodes des cellules est de l'air atmosphérique contenant de l'oxygène à hauteur de 20% environ. En entrée de pile, le rapport stoechiométrique d'oxygène est supérieur ou égal à 1, de sorte que la quantité d'oxygène injecté est supérieure ou égale à la quantité d'oxygène consommé par les cathodes de la pile.

Cet orifice d'entrée 11 de la pile est relié, c'est-à-dire fluidiquement connecté, au collecteur d'entrée Ce-A, Ce-B de chacun des groupes par l'intermédiaire de lignes d'alimentation fluidique 120 adaptées à alimenter sélectivement les deux groupes de cellules. En d'autres termes, une communication fluidique est possible entre l'orifice d'entrée 11 et chaque collecteur d'entrée Ce-A, Ce-B des groupes. Ces lignes d'alimentation 120 comportent des conduits 121A, 121B reliant l'orifice d'entrée 11 aux différents collecteurs d'entrée Ce-A, Ce-B et comportent au moins un commutateur sélectif autorisant ou bloquant l'écoulement entre l'orifice d'entrée vers chacun des collecteurs d'entrée Ce-A, Ce-B et ainsi alimenter un premier groupe différent d'une étape d'alimentation à l'autre. Ce commutateur sélectif est donc adapté à alimenter un premier groupe différent d'une étape d'alimentation à l'autre. Dans cet exemple, deux vannes d'entrée 122A, 122B sont prévues entre l'orifice d'entrée 11 et les collecteurs d'entrée Ce-A, Ce-B.

Dans la suite de la description, on entend par alimentation sélective que les lignes d'alimentation 120 permettent d'alimenter directement l'un ou plusieurs des groupes en fluide d'alimentation, et non pas les autres, le ou les groupes alimentés étant différents d'une étape d'alimentation à l'autre, c'est-à-dire entre deux étapes d'alimentation successives. De plus, par groupe de cellules alimenté, ou directement alimenté, on entend que le collecteur d'entrée du groupe alimenté est fluidiquement relié à l'orifice d'entrée et que du fluide d'alimentation est introduit dans le groupe considéré, sans traverser au préalable un autre groupe de cellules. Par ailleurs, par chemin fluidique, on entend le chemin de circulation fluidique parcouru par le fluide d'alimentation dans les groupes de cellules, à partir d'un premier groupe alimenté jusqu'à un ou plusieurs derniers groupes.

La pile comporte également des lignes de distribution fluidique 130 adaptées à assurer la communication fluidique des groupes entre eux. Dans cet exemple, les lignes de distribution fluidique sont formées du collecteur de sortie Cs commun à chacun des groupes, de sorte que du fluide circulant dans un groupe peut s'écouler en direction de l'autre groupe. Sur la figure 2, le collecteur de sortie commun Cs est représenté par une ligne continue rejoignant les deux groupes.

La pile à combustible comporte également un dispositif d'évacuation 140 adapté à permettre l'évacuation continue du fluide d'alimentation contenant des espèces réactives non consommées hors du ou des derniers groupes non directement alimentés jusqu'à l'orifice de sortie 12. Dans cet exemple, le dispositif d'évacuation comporte deux conduits d'évacuation 141A, 141B qui relient les collecteurs d'entrée Ce-A, Ce-B à l'orifice de sortie 12, chaque conduit étant muni d'une vanne 142A, 142B autorisant ou bloquant l'écoulement.

De plus, la pile 110 comporte des lignes de purge 150 reliant le collecteur de sortie commun Cs à l'orifice de sortie 12. Ces lignes de purge 150 comportent un conduit 151 muni d'une vanne de purge 152 reliant le collecteur de sortie Cs à l'orifice de sortie 12.

Les inventeurs ont mis en évidence que le procédé d'alimentation décrit dans le document WO2012/152623, lorsqu'il est appliqué à l'architecture fluidique décrite ci-dessus où la pile 110 comporte le dispositif d'évacuation 140, les cellules de la pile étant alimentées en espèce réactive diluée dans un fluide porteur, par exemple les cathodes d'une pile à hydrogène étant alimentées en air atmosphérique, peut conduire à une chute temporaire de la tension ou du courant produit par la pile.

C'est en particulier le cas lorsque deux étapes d'alimentation se succèdent directement, c'est-à-dire lorsqu'une deuxième étape d'alimentation est effectuée directement à la suite d'une première étape d'alimentation, sans étape de purge intermédiaire. En effet, les inventeurs ont mis en évidence que la deuxième étape d'alimentation débute par une phase transitoire au cours de laquelle une chute temporaire de la tension ou du courant se produit. Il semble que cette chute de tension provienne de la formation temporaire d'une zone localisée appauvrie qui présente une diminution brutale de la fraction molaire de l'espèce réactive.

Les figures 3a à 3e illustrent schématiquement le phénomène physique conduisant à la chute temporaire de tension produite par la pile. A titre d'exemple, on considère que le fluide d'alimentation est de l'air atmosphérique injecté via l'orifice d'entrée 11 avec une sur-stoechiométrie, ou coefficient stoechiométrique, égale à 2, c'est-à-dire que le débit molaire d'oxygène injecté via l'orifice d'entrée 11 est quatre fois supérieur au débit molaire oxygène consommé le long du chemin fluidique par les cathodes des groupes de cellules. Le débit molaire d'air (hors vapeur d'eau) injecté via l'orifice d'entrée 11 est lui-même approximativement cinq fois supérieur au débit molaire d'oxygène injecté, compte-tenu de la concentration d'oxygène dans l'air atmosphérique (21%).

La figure 3a est une représentation schématique de la pile à combustible selon le premier mode de réalisation décrite en référence à la figure 2, lors d'une première étape d'alimentation. La figure 3b est un diagramme illustrant la répartition spatiale, entre les collecteurs d'entrée et de sortie des groupes A et B de la pile illustrée en figure 3a, de la fraction molaire d'espèce réactive lors de la première étape d'alimentation et en régime permanent, c'est-à-dire lorsque la répartition spatiale de la fraction molaire d'espèce réactive le long du chemin fluidique ne varie plus dans le temps.

En référence aux figures 2 et 3a, le groupe A est alimenté en air atmosphérique, c'est-à-dire que le fluide d'alimentation, provenant de l'orifice d'entrée 11, est injecté dans le collecteur d'entrée Ce-A. Pour cela, la vanne 122A est ouverte et la vanne 122B est fermée. Pour éviter que le fluide s'écoule dans le conduit d'évacuation 141A, la vanne 142A est fermée. Le fluide s'écoule jusqu'au collecteur de sortie commun Cs puis, la vanne de purge 152 étant fermée, est introduit dans le groupe B et s'écoule jusqu'à l'extrémité du chemin fluidique, c'est-à-dire jusqu'au collecteur d'entrée Ce-B. Le fluide d'alimentation est ensuite évacué jusqu'à l'orifice de sortie 12, la vanne 142B étant ouverte.

En référence à la figure 3b, en régime permanent lors de cette étape d'alimentation, par exemple au terme $t_{fin}$ de cette étape, la répartition spatiale de la fraction molaire d'oxygène $c_{O2}^{rel}$ le long du chemin fluidique diminue continûment entre une valeur maximale $c_2$ située au début du chemin fluidique, c'est-à-dire au niveau du collecteur Ce-A, jusqu'à une valeur minimale $c_1$ située à l'extrémité du chemin fluidique, c'est-à-dire au niveau du collecteur Ce-B. Le lieu de l'alimentation est représenté par un point situé à $c_2$ au niveau de Ce-A, et le sens d'écoulement est illustré par une flèche orientée vers le collecteur de sortie Cs dans le groupe A et vers le collecteur d'entrée Ce-B dans le groupe B.

En supposant que le taux de consommation d'oxygène est identique en tout point des deux groupes de cellules, l'évolution spatiale de la fraction molaire d'oxygène $c(x)$ en fonction de la position x le long du chemin fluidique suit l'équation suivante (1), en considérant les grandeurs $c_0$, St et n, désignant respectivement la fraction molaire d'oxygène dans l'air injecté (ici 0,210), le rapport de sur-stoechiométrie (ici 2) et le nombre total de groupes de cellules traversés (ici 2), x variant entre 0 (début du chemin fluidique) et n (extrémité du chemin fluidique) :

$$c(x) = c_0 \frac{St - \dfrac{x}{n}}{St - \dfrac{c_0 x}{n}} \qquad\qquad (1)$$

Cette équation (1) permet de calculer la fraction molaire d'oxygène en tout point de l'écoulement. On citera les valeurs suivantes : c(0)=0,210 (entrée du groupe A) ; c(0,5)=0,188 (milieu du groupe A) ; c(1)=0,166 (sortie du groupe A et entrée du groupe B) ; c(1,5)=0,142 (milieu du groupe B) ; c(2)=0,117 (sortie du groupe B).

Ainsi, dans cet exemple, la valeur $c_2$ est égale à 0,210 et la valeur $c_1$ est égale à 0,117. La répartition spatiale suit ici, à titre purement illustrative, une évolution quasiment linéaire obtenue à l'aide de l'équation (1), correspondant à une vitesse de consommation d'oxygène identique en tout point des cellules, mais d'autres évolutions sont possibles. Par ailleurs, on a illustré une étape d'alimentation du groupe A mais la situation est similaire lorsque l'étape d'alimentation porte sur le groupe B.

La figure 3c est une représentation schématique de la pile à combustible selon le premier mode de réalisation décrite en référence à la figure 2, lors d'une deuxième étape d'alimentation succédant directement à la première étape de la figure 3a. La figure 3d est un diagramme illustrant la répartition spatiale, entre les collecteurs d'entrée et de sortie des groupes A et B de la pile illustrée en figure 3c, de la fraction molaire d'espèce réactive pour différents instants d'un régime transitoire de la deuxième étape d'alimentation.

En référence aux figures 2 et 3c, l'alimentation est inversée par rapport à l'étape d'alimentation précédente. Plus précisément, le groupe B est maintenant alimenté en air atmosphérique, c'est-à-dire que le fluide d'alimentation, provenant de l'orifice d'entrée 11, est injecté dans le collecteur d'entrée Ce-B. Pour cela, la vanne 122B est ouverte et la vanne 122A est fermée. Pour éviter que le fluide ne s'écoule dans le conduit d'évacuation 141B, la vanne 142B est fermée. Le fluide s'écoule jusqu'au collecteur de sortie commun Cs puis, la vanne de purge 152 étant fermée, est introduit dans le groupe A et s'écoule jusqu'à l'extrémité du chemin fluidique, c'est-à-dire jusqu'au collecteur d'entrée Ce-A. Le fluide d'alimentation est ensuite évacué jusqu'à l'orifice de sortie 12, par le conduit d'évacuation 141A, la vanne 142A étant ouverte.

En référence à la figure 3d, la deuxième étape d'alimentation débute par un régime transitoire, d'une durée T, dans lequel la répartition spatiale de la fraction molaire d'oxygène $c_{O2}^{rel}$ varie dans le temps jusqu'à ce qu'un régime permanent s'établisse (à partir de t≥T). Sur les différents diagrammes obtenus à l'aide d'une simulation de la consommation d'oxygène dans l'écoulement de gaz en fonction du temps, le lieu de l'alimentation est représenté par un point situé à $c_2$ au niveau de Ce-B, et le sens d'écoulement est illustré par une flèche orientée vers le collecteur de sortie Cs dans le groupe B et vers le collecteur d'entrée Ce-A dans le groupe A.

Au début de la deuxième étape d'alimentation (fig.3d, t=0), la répartition spatiale de la fraction molaire d'oxygène le long du chemin fluidique est identique à celle se présentant en fin de la première étape d'alimentation (fig.3b), c'est-à-dire que la fraction molaire d'oxygène à Ce-B est de 0,117. Lors de cette nouvelle étape d'alimentation, l'air atmosphérique est injecté directement au niveau du collecteur Ce-B, ce qui conduit à une nouvelle valeur $c_2$ de fraction molaire d'oxygène à Ce-B de 0,210. Ainsi apparaît une zone localisée P qui présente une diminution brutale de la fraction molaire d'oxygène, ici de l'ordre de 50%. L'air appauvri situé dans cette zone P a déjà traversé une première fois les deux groupes de cellules A et B. Compte-tenu du changement de sens de l'écoulement, cette zone P va retraverser une deuxième fois les deux groupes A et B au cours de cette phase transitoire. En aval de l'écoulement, la fraction molaire d'oxygène augmente continûment, suivant le profil initial, jusqu'à la valeur $c_2$ au niveau du collecteur Ce-A du groupe A.

A un instant ultérieur de la deuxième étape d'alimentation (fig.3d, t=T/4), du fait de l'alimentation du groupe B, la zone localisée appauvrie P a migré le long du chemin fluidique et se situe approximativement à la moitié des cellules du groupe B. L'air appauvri situé dans cette zone P traverse le groupe B et la consommation d'oxygène dans les cellules accentue encore l'appauvrissement en oxygène. Ainsi, arrivée à la moitié de cette traversée, la fraction molaire minimale d'oxygène dans cette zone P a diminué et est égale à 0,093. En aval de l'écoulement, la fraction molaire d'oxygène augmente continûment, suivant un profil approximativement initial, présentant toutefois des valeurs plus faibles, du fait de la consommation d'oxygène.

A un instant ultérieur de la deuxième étape d'alimentation (fig.3d, t=T/2), la zone localisée appauvrie P a encore migré le long du chemin fluidique et se situe approximativement au niveau du collecteur de sortie commun Cs. La valeur minimale de la fraction molaire dans la zone P a encore diminué et est ici de l'ordre de 0,068.

A un instant ultérieur de la deuxième étape d'alimentation (fig.3d, t=3T/4), la zone localisée appauvrie P a encore migré le long du chemin fluidique en direction du collecteur d'entrée Ce-A du groupe A, et se situe maintenant approximativement à la moitié du groupe A. Le régime permanent est atteint dans le groupe B alimenté, c'est-à-dire que la répartition spatiale de la fraction molaire d'oxygène dans le groupe B n'évolue sensiblement plus dans le temps. Cependant, le régime transitoire n'est pas terminé au niveau de la pile dans la mesure où la zone appauvrie P se situe maintenant dans le groupe A. La valeur minimale de la fraction molaire d'oxygène dans la zone P a diminué et est ici de l'ordre de 0,041. De plus, dans la mesure où la valeur de la fraction molaire d'oxygène à l'extrémité du chemin fluidique (au niveau du collecteur Ce-A) diminue de par la consommation d'oxygène dans le groupe A, il se forme une zone P' relativement étendue appauvrie en oxygène, qui s'étend de la zone P jusqu'au collecteur Ce-A.

A un instant ultérieur de la deuxième étape d'alimentation (fig.3d, t=T), la zone localisée appauvrie P a atteint l'extrémité du chemin fluidique, c'est-à-dire ici le collecteur d'entrée Ce-A du groupe A. Le régime transitoire est sensiblement terminé et le régime permanent débute au niveau de la pile. Cependant, la valeur minimale de la fraction molaire d'oxygène dans la zone P est ici très faible, de l'ordre de 0,015.

La figure 3e représente l'évolution temporelle de la fraction molaire moyenne d'oxygène pendant toute la durée de la phase transitoire explicitée sur la figure 3d, de t=0 à t=T, pour chacun des groupes A, B de cellules. Dans le groupe B, la fraction molaire moyenne reste toujours comprise entre les deux valeurs extrêmes rencontrées en régime permanent, à savoir 0,142 et 0,188. Ceci correspond à une faible chute de performance de ce groupe de cellule pendant la phase transitoire. En revanche, dans le groupe A, la fraction molaire d'oxygène moyenne est inférieure à 0,142 pendant les trois quarts de la phase transitoire, en passant par un minimum à 0.096. La chute de performance est alors sensible pour ce groupe de cellules.

Ainsi, lors du régime transitoire de durée T, toutes les cellules des groupes sont parcourues par une zone localisée P présentant une chute sensible de la fraction molaire en espèce réactive. La pile présente donc une chute de la tension ou du courant produit pendant une durée T au début de chaque nouvelle étape d'alimentation succédant directement à une étape d'alimentation. Cette chute temporaire de la tension ou du courant est particulièrement importante dans le groupe de cellules A, où la fraction molaire moyenne d'oxygène passe par une valeur minimum très inférieure à la valeur observée en fonctionnement permanent. Cette chute peut perturber le fonctionnement de certains éléments du système de gestion électrique de la pile, par exemple l'électronique de puissance. En effet, les convertisseurs, souvent connectés aux bornes des piles de puissance, devront tolérer une plage de tension d'entrée plus grande, ce qui imposera un surdimensionnement de ces équipements, ayant des conséquences néfastes en termes de coût et d'encombrement du système. Cette zone de forte inhomogénéité électrochimique impacte toutes les cellules des groupes de la pile, ce qui peut induire une dégradation des propriétés électrochimiques de celles-ci, d'autant plus lorsque la fraction molaire d'espèce réactive devient localement faible.

Afin de limiter la baisse de fraction molaire, et notamment celle obtenue localement dans les zones P et P', il peut être envisagé d'augmenter temporairement le débit d'alimentation pendant la phase transitoire, de manière à augmenter la sur-stoechiométrie temporairement. Cette mesure est efficace, dans le sens où la valeur minimale de fraction molaire d'oxygène dans la zone P peut passer, par exemple, de 0,015 à 0,039, tandis que la fraction molaire moyenne dans le groupe A ne chute pas au-dessous de 0,106 au lieu de 0,096. En revanche, la mise en oeuvre de cette augmentation de débit rapide et brève complique le dispositif d'alimentation de la pile (comprenant par exemple un compresseur d'air) ainsi que sa commande. Dans tous les cas, cette mesure pourra être également mise en oeuvre dans l'invention.

Dans le but de limiter l'impact électrochimique du procédé d'alimentation décrit dans le document WO2012/152623 appliqué à l'architecture fluidique décrite ci-dessus et à une alimentation des cellules en espèce réactive diluée dans un fluide porteur, le procédé d'alimentation selon l'invention comporte, après chaque étape d'alimentation, une étape de purge de tous les groupes de cellules.

Plus précisément, le procédé d'alimentation selon l'invention comporte une pluralité d'étapes d'alimentation sélective des N groupes de cellules en espèce réactive, au cours desquelles on alimente un premier groupe de cellules. L'espèce réactive non consommée dans le premier groupe circule dans les autres groupes par l'intermédiaire des lignes de distribution 130 assurant la communication fluidique des groupes entre eux dans la mesure où ils sont agencés de manière à former, avec les N groupes, un chemin fluidique pour l'espèce réactive, allant du premier groupe alimenté jusqu'à un ou plusieurs derniers groupes formant l'extrémité du chemin fluidique. D'une étape d'alimentation à l'autre, c'est-à-dire entre deux étapes d'alimentation successives, le premier groupe alimenté est différent, et éventuellement le ou les derniers groupes. A la suite de chacune des étapes d'alimentation, on effectue une étape de purge des N groupes de cellules au cours de laquelle on alimente simultanément chacun des groupes en espèce réactive. Chaque groupe communique alors avec l'orifice de sortie 12 de la pile pour permettre l'évacuation fluidique des N groupes de cellules.

Ainsi, à la différence du procédé selon l'art antérieur mentionné précédemment, dans lequel une pluralité d'étapes d'alimentation sélective sont effectuées successivement avant de réaliser une étape de purge de tous les groupes de cellules, on réalise ici une étape de purge après chaque étape d'alimentation sélective. En d'autres termes, entre deux étapes d'alimentation sélective successives, une étape de purge des groupes de cellules est effectuée. Le procédé d'alimentation de la pile selon l'invention permet de limiter son impact sur les performances et/ou propriétés électriques ou électrochimiques de la pile.

Les figures 4a à 4e illustrent schématiquement l'évolution temporelle de la répartition spatiale de la fraction molaire d'espèce réactive le long du chemin fluidique entre une étape d'alimentation suivie d'une étape de purge. Ici également, et seulement à titre d'exemple, on considère que le fluide d'alimentation est de l'air atmosphérique injecté via l'orifice d'entrée 11 avec une sur-stoechiométrie égale à 2, c'est-à-dire que le débit molaire d'oxygène injecté via l'orifice d'entrée 11 est quatre fois supérieur au débit molaire oxygène consommé le long du chemin fluidique par les cathodes dans les groupes de cellules. Le débit molaire d'air (hors vapeur d'eau) injecté via l'orifice d'entrée 11 est lui-même approximativement cinq fois supérieur au débit molaire d'oxygène injecté, compte tenu de la concentration d'oxygène dans l'air atmosphérique (21%).

La figure 4a est une représentation schématique de la pile à combustible selon le premier mode de réalisation décrite en référence à la figure 2, lors d'une étape d'alimentation. La figure 4b est un diagramme illustrant la répartition spatiale, entre les collecteurs d'entrée et de sortie des groupes A et B de la pile illustrée en figure 4a, de la fraction molaire d'espèce réactive $c_{O2}^{rel}$ lors de l'étape d'alimentation en régime permanent, c'est-à-dire lorsque la répartition spatiale de la fraction molaire d'espèce réactive le long du chemin fluidique ne varie plus dans le temps.

Les conditions d'alimentation sont identiques à celles de la figure 3a et conduisent à une répartition spatiale de la fraction molaire d'oxygène identique à celle de la figure 3b. Ces figures ne sont donc pas décrites davantage. La répartition spatiale suit ici, à titre purement illustrative, une évolution linéaire mais d'autres évolutions sont possibles. Par ailleurs, on a illustré une étape d'alimentation du groupe A mais la situation est similaire lorsque l'étape d'alimentation porte sur le groupe B.

La figure 4c est une représentation schématique de la pile à combustible selon le premier mode de réalisation décrite en référence à la figure 2, lors d'une étape de purge succédant directement à l'étape d'alimentation de la figure 4a. La figure 4d est un diagramme illustrant la répartition spatiale, entre les collecteurs d'entrée et de sortie des groupes A et B de la pile illustrée en figure 4c, de la fraction molaire d'espèce réactive pour différents instants d'un régime transitoire de l'étape de purge.

En référence aux figures 2 et 4c, les deux groupes sont tous alimentés simultanément en espèce réactive à partir de l'orifice d'entrée 11. Ainsi, le groupe A reste alimenté par rapport à l'étape d'alimentation précédente, et le groupe B est également alimenté en espèce réactive. Ainsi, le fluide d'alimentation, provenant de l'orifice d'entrée 11, est injecté simultanément dans les collecteurs d'entrée Ce-A et Ce-B, les vannes 122A et 122B étant ouvertes et les vannes d'évacuation 142A et 142B étant fermées. Le fluide s'écoule dans les cellules de chacun des groupes jusqu'au collecteur de sortie commun Cs puis est évacué jusqu'à l'orifice de sortie 12 par le conduit de purge 151, la vanne 152 étant ouverte. A noter cependant que les deux groupes étant alimentés en parallèle, le débit molaire du fluide d'alimentation au niveau de l'orifice d'entrée 11 lors de l'étape de purge peut rester constant ou être augmenté par rapport à sa valeur lors de l'étape d'alimentation précédente. A titre d'exemple, on détaille dans les diagrammes de la figure 4d le cas où le débit molaire du fluide d'alimentation à l'orifice d'entrée 11 est sensiblement égal à ce qu'il était lors de l'étape d'alimentation précédente.

En référence à la figure 4d, l'étape de purge débute par un régime transitoire, d'une durée T', dans lequel la répartition spatiale de la fraction molaire d'oxygène varie dans le temps jusqu'à ce qu'un régime permanent s'établisse (à partir de t≥T'). Sur les différents diagrammes, le lieu de l'alimentation est représenté par deux points, situés à $c_2$ au niveau de Ce-A et au niveau de Ce-B, et le sens d'écoulement est illustré par une flèche orientée vers le collecteur de sortie Cs dans les groupes A et B.

Au début de l'étape de purge (fig.4d, t=0), la répartition spatiale de la fraction molaire d'oxygène le long du chemin fluidique est identique à ce qu'elle était en fin de l'étape d'alimentation (fig.4b), c'est-à-dire que la fraction molaire d'oxygène à Ce-A est à 0,210 alors qu'elle est, à Ce-B, de 0,117. Lors de cette étape de purge, la somme des débits molaires au niveau des collecteurs d'entrée Ce-A et Ce-B est égale au débit molaire d'air injecté à l'orifice 11 au cours de l'étape précédente. En prenant l'exemple d'une répartition équilibrée du flux entre les deux groupes de cellules, l'alimentation d'air en entrée de chaque groupe de cellules correspond toujours à une sur-stoechiométrie de 2. Cette alimentation en parallèles des groupes A et B conduit à une valeur $c_2$ identique au collecteur Ce-A mais à une nouvelle valeur $c_2$ au collecteur Ce-B de 0,210. Apparaît donc, dans le groupe B uniquement, une zone localisée P qui présente une diminution brutale, ici de l'ordre de 50% de la fraction molaire d'oxygène. En aval de l'écoulement, dans le groupe B, la fraction molaire d'oxygène augmente continûment, suivant le profil initial, jusqu'au collecteur de sortie commun Cs, alors qu'elle diminue continûment, dans le groupe A, jusqu'au collecteur Cs.

Dans le groupe A, la répartition spatiale de la fraction molaire d'oxygène s'établit progressivement, entre la nouvelle valeur $c_2$ de l'ordre de 0,21 en amont de l'écoulement, au niveau du collecteur Ce-A, jusqu'à la valeur $c_1$ en aval de l'écoulement, au niveau du collecteur Cs, $c_1$ étant approximativement de l'ordre de 0,117. Le calcul du profil de fraction molaire d'oxygène en régime permanent peut être calculé à l'aide de l'équation (1), en prenant n=1 et en faisant varier x entre 0 et 1. Le régime transitoire dure de l'ordre de T'. Aucune chute brutale de la fraction molaire n'est observée dans le groupe A, seul un point d'inflexion est visible sur les profils représentés sur la figure 4d. La fraction molaire garde toujours une valeur supérieure ou égale à ci, et la fraction molaire moyenne pour le groupe A diminue de manière monotone en gardant une valeur élevée (de 0,188 à 0,166).

Dans le groupe B, à un instant ultérieur de l'étape de purge (fig.4d, t=T'/4), le nouveau profil s'établit progressivement. La zone localisée appauvrie P a migré le long du chemin fluidique et se situe approximativement au premier quart des cellules du groupe B. Du fait de la consommation en oxygène par les cellules des groupes lors de la réaction électrochimique, la valeur minimale de la fraction molaire dans la zone P a diminué et est ici de l'ordre de 0,093.

A un instant ultérieur de l'étape de purge (fig.4d, t=T'/2), la zone localisée appauvrie P a encore migré le long du chemin fluidique et se situe approximativement au milieu des cellules du groupe B. La valeur minimale de la fraction molaire dans la zone P a diminué et est ici de l'ordre de 0,069.

A un instant ultérieur de l'étape de purge (fig.4d, t=3T'/4), la zone localisée appauvrie P a migré le long du chemin fluidique et se situe maintenant approximativement au dernier quart des cellules du groupe B. La valeur minimale de la fraction molaire dans la zone P a diminué et est ici de l'ordre de 0,041. Comme la valeur de la fraction molaire d'oxygène à l'extrémité du chemin fluidique (au niveau du collecteur Cs-B) diminue de par la consommation d'oxygène dans le groupe B, il se forme une zone P' relativement étendue appauvrie en oxygène, qui s'étend de la zone P jusqu'au collecteur Cs-B. Néanmoins, comparée à la zone P' observée dans le cas précédent (fig. 3d), la fraction molaire au niveau du collecteur de sortie est ici nettement supérieure.

A un instant ultérieur de la deuxième étape d'alimentation (fig.4d, t=T'), la zone localisée appauvrie P a atteint l'extrémité des cellules du groupe B, c'est-à-dire ici le collecteur de sortie Cs. Le régime transitoire est sensiblement terminé et le régime permanent débute au niveau de la pile. La valeur minimale de la fraction molaire d'oxygène dans la zone P est ici de l'ordre de 0,017, et, une fois cette zone évacuée, la valeur minimale de la fraction molaire dans le groupe B sera approximativement de 0,117, de même qu'à l'extrémité du groupe A.

La figure 4e représente l'évolution temporelle de la fraction molaire moyenne d'oxygène pendant toute la durée de la phase transitoire explicitée sur la figure 4d, de t=0 à t=T', pour chacun des groupes A, B de cellules. Dans le groupe B, apparaît pendant toute la durée de la phase transitoire une baisse modérée de la fraction molaire d'oxygène moyenne. Inférieure à 0,142 entre t=0 et t=3T'/4, la fraction molaire moyenne passe par un minimum à 0,134. Ceci indique que la présence des zones P et P' dans l'écoulement n'a qu'un impact limité au niveau global. La chute de performance sera ainsi plus modérée pour ce groupe de cellules que celle vue par le groupe A dans le cas précédent.

En augmentant temporairement la sur-stoechiométrie de la pile à une valeur, par exemple, de 2,5 au lieu de 2, la valeur minimale de la fraction molaire passe de 0,017 à 0,040, et la fraction molaire moyenne minimum passe de 0,134 à 0,139. On retrouve ici un effet positif de l'augmentation de la sur-stoechiométrie dans la phase transitoire.

Ainsi, en effectuant de manière systématique une étape de purge des groupes de cellules entre deux étapes d'alimentation sélective successives, on limite l'impact de la zone localisée appauvrie, qui migre cette fois-ci le long d'un seul groupe de cellules. Ainsi, l'amplitude de la chute de tension ou de courant produit par la pile au cours du régime transitoire est réduite. De plus, la zone appauvrie concerne un nombre limité de groupes de cellules et non plus tous les groupes de cellules. Le procédé selon l'invention permet ainsi de limiter la chute temporaire de tension ou de courant produit par la pile.

En variante, et de manière avantageuse, lors de l'étape de purge, le débit molaire en espèce réactive en entrée des groupes de cellules peut être différent entre au moins deux desdits groupes. De préférence, le débit molaire en espèce réactive en entrée d'un groupe de cellules, celui-ci étant un dernier groupe lors de l'étape d'alimentation précédente, est supérieur à celui d'au moins un autre groupe. Ainsi, les groupes A, B de cellules peuvent être alimentés distinctement lors de l'étape de purge, par exemple en modifiant la valeur du débit molaire en oxygène au niveau des vannes 122A et 122B (figure 2). Ainsi, en différenciant les débits molaires d'entrée, on applique temporairement une sur-stoechiométrie différente au groupe A et au groupe B. A titre d'exemple, au lieu d'appliquer une sur-stoechiométrie de 2 en entrée des groupes A et B, une sur-stoechiométrie de 1,5 est appliquée à l'entrée du groupe A et de 2,5 à l'entrée du groupe B, uniquement pendant une durée T". Dans tous les cas, la sur-stoechiométrie globale appliquée à l'ensemble des deux groupes de cellules reste égale à 2. Ceci peut être facilement mis en oeuvre par exemple en provoquant une restriction de passage temporaire dans la conduite d'alimentation 121A du groupe A. La perte de charge occasionnée pourra être dimensionnée pour engendrer la diminution du débit d'alimentation du groupe A correspondant à la chute de sur-stoechiométrie désirée, accompagnée d'une augmentation correspondante pour le débit d'alimentation et la sur-stoechiométrie en entrée du groupe B.

Les figures 5a et 5b illustrent cette phase transitoire, qui se déroule ici en deux temps. D'abord, pendant une durée T", une chute brutale de fraction molaire d'oxygène apparaît dans le profil de fraction molaire à l'entrée du groupe B (Ce-B) à t=0, et se déplace jusqu'à la sortie du groupe (Cs), à t=T". Comme dans le cas précédent, une zone P est présente avec une valeur minimale de fraction molaire en diminution au fur et à mesure de sa traversée du groupe B. Mais ici, le débit d'alimentation en air étant plus grand que précédemment, la chute de fraction molaire est moins importante, comme en témoigne la pente de l'évolution de fraction molaire en amont de la zone P, visible à t=T"/2. Cette pente est moins importante que celle observée sur la figure 4d, entre t=T'/4 et t=3T'/4, du fait de la sur-stoechiométrie plus forte. De ce fait, la valeur minimale de fraction molaire dans le groupe B sur la figure 5a, obtenue dans la zone P à t=T", est nettement plus élevée que précédemment, à 0,037 au lieu de 0,017. De plus, il n'y a plus ici de zone P' entre la zone P et la sortie du groupe Cs, car la baisse de fraction molaire est ici moins importante que précédemment.

Au cours de cette première partie de phase transitoire, l'évolution de la fraction molaire d'oxygène dans le groupe A est proche de celle observée dans le cas précédent, avec un profil présentant un point d'inflexion, séparant deux zones de pente différentes (figure 5a, t=0 à t=T") : en partant de l'entrée Ce-A, la pente correspond d'abord à une sur-stoechiométrie de 1.5 (celle appliquée pendant cette phase), puis elle correspond à une sur-stoechiométrie de 4 (celle appliquée pendant l'étape d'alimentation précédente). Comme la zone P pour le groupe B, le point d'inflexion dans le groupe A se déplace de l'entrée Ce-A vers la sortie Cs. A l'issue de la durée T", celui-ci n'a pas encore atteint la sortie Cs car le débit d'alimentation du groupe A est plus faible que celui du groupe B.

A partir t=T", la deuxième partie de la phase transitoire commence. L'alimentation des deux groupes est modifiée, avec un rétablissement de conditions d'alimentation identiques pour les deux groupes. Autrement dit, la sur-stoechiométrie devient égale à 2 pour le groupe A comme pour le groupe B. La durée de cette deuxième partie vaut T', comme dans le cas précédent où la sur-stoechiométrie de chaque groupe était également fixée à 2. Dans un premier temps, on voit apparaître trois zones dans le groupe A, présentant chacune une pente différente dans l'évolution de la fraction molaire d'oxygène, et séparée par un point d'inflexion (visible clairement sur la figure 5a, t=T"+T'/4). Depuis l'entrée Ce-A jusqu'au premier point d'inflexion, la pente est celle correspondant à une sur-stoechiométrie de 2, c'est-à-dire la valeur imposée pendant la phase de purge en cours en cours. En aval de ce point d'inflexion et jusqu'au point d'inflexion suivant, la pente correspond à la sur-stoechiométrie imposée pendant la première partie de cette phase de purge, c'est-à-dire 1,5. Enfin, en aval du deuxième point d'inflexion, la pente correspond à la sur-stoechiométrie appliquée avant la phase transitoire, lors de l'étape d'alimentation, c'est-à-dire 4.

Dans le groupe B, un seul point d'inflexion apparaît (visible à t=T"+T'/4), situé à la même distance de Ce que dans le groupe A. En amont de ce point d'inflexion, la pente de l'évolution de la fraction molaire d'oxygène correspond à une sur-stoechiométrie de 2, comme dans le groupe A. En aval de ce point d'inflexion et jusqu'à la sortie Cs, la pente est uniforme est correspond à la sur-stoechiométrie appliquée pendant la première partie de cette phase transitoire, c'est-à-dire 2,5.

Du fait de l'entrainement du fluide de l'entrée Ce vers la sortie Cs dans les deux groupes de cellules, les points d'inflexion sont entrainés vers la sortie, puis disparaissent. A l'issue de la durée T' de cette seconde partie de la phase transitoire, c'est-à-dire à t=T"+T', le profil de concentration dans chacun des deux groupes est établi.

L'évolution de la fraction molaire d'oxygène moyenne dans chaque groupe au cours de la phase transitoire, représentée sur figure 5b, montre que la diminution de cette grandeur dans le groupe B est à la fois moins forte (minimum 0,139 au lieu de 0,134, en partant d'une valeur de 0,142), et moins présente dans le temps (durée de T"/2, au lieu de 3T'/4, soit environ une réduction d'un facteur 2, avec ici T'~1,4T"). Le maintien des fractions molaires d'oxygène à des valeurs élevées, et l'absence de zone P' dans l'écoulement permet de garantir une bonne performance de cette pile pendant la phase transitoire, et d'éviter l'apparition de conditions locales néfastes pour la durée de vie des cellules.

Une augmentation temporaire de la sur-stoechiométrie pendant la phase transitoire peut être envisagée ici comme dans les autres cas. En considérant une sur-stoechiométrie globale de 2,5, les sur-stoechiométries à appliquer au groupe A et au groupe B peuvent être par exemple fixée respectivement à 2 et 3. L'effet de cette mesure est particulièrement positif, puisque la valeur minimale de la fraction molaire dans le groupe B passe de 0,037 à 0,052, et que le minimum observé dans l'évolution de la fraction molaire moyenne pour le groupe B ne diffère plus que de manière négligeable avec la valeur en début de phase transitoire.

En référence aux figures 6a et 6b, le procédé d'alimentation se poursuit avec une autre étape d'alimentation sélective, au cours de laquelle un premier groupe est directement alimenté, celui-ci étant différent de celui de l'étape d'alimentation précédente, et le dernier groupe, situé à l'extrémité du chemin fluidique, est également différent de celui de l'étape d'alimentation précédente.

On remarque que, lors de l'étape d'alimentation suivante, le sens d'écoulement au niveau du premier groupe alimenté est avantageusement identique au sens d'écoulement ayant eu lieu dans ce même groupe lors de l'étape de purge précédente. Plus précisément, ici, dans le groupe B le sens d'écoulement lors de l'étape de purge va du collecteur Ce-B vers le collecteur Cs. Lors de l'étape d'alimentation suivante, le groupe B devenant le premier groupe alimenté, le sens d'écoulement est alors identique. Ainsi, il n'y a pas d'inversion du profil de répartition spatiale de la fraction molaire d'espèce réactive, ce qui limite la formation d'une nouvelle zone appauvrie migrant le long du chemin fluidique.

L'évolution spatiale du profil de fraction molaire dans les deux groupes de cellules lors du passage de l'étape de purge à l'étape suivante d'alimentation est représentée sur la figure 6a, où le groupe B est alimenté et où le chemin fluidique correspond à la configuration de la pile telle que représentée sur la figure 3c. Comme le montre la figure 6a, la phase transitoire d'une durée T ne fait pas apparaître de discontinuité dans le profil de fraction molaire d'espèce réactive dans les groupes de cellules A et B. Deux points d'inflexion apparaissent et se déplacent le long du chemin d'écoulement. Le minimum est obtenu pour le fluide situé au niveau de Cs à t=0, qui traverse ensuite le groupe A jusqu'à t=T/2. C'est à cet instant que l'on observe la valeur la plus faible pour la fraction molaire locale, avec une valeur de l'ordre de 0,069, située au niveau du collecteur Ce-A.

En référence à la figure 6b, la fraction molaire moyenne d'oxygène est identique dans chaque groupe de cellules à l'instant t=0. Elle chute ensuite pour le groupe A, mais ne descend jamais au-dessous de 0,113. Cette valeur reste relativement élevée, très proche de la valeur $c_1$, ce qui garantit que la chute de performance observée notamment entre t=T/4 et t=T/2 restera limitée.

En outre, comme il sera détaillé plus loin, il peut être avantageux que le sens d'écoulement dans chacun des groupes de cellules reste identique, d'une étape d'alimentation à une étape de purge suivante et inversement.

La figure 7 illustre une pile à combustible 110 selon un second mode de réalisation. Elle se distingue essentiellement de la pile selon le premier mode de réalisation en ce que les lignes de distribution 230 et le dispositif d'évacuation 240 sont agencés de sorte que le sens de circulation du fluide d'alimentation dans les groupes puisse être co-courant d'un groupe à l'autre, c'est-à-dire identique, permettant ainsi d'obtenir un sens d'écoulement identique d'une étape d'alimentation à une étape de purge suivante et inversement.

Dans cet exemple, chaque groupe de cellules comporte un collecteur d'entrée Ce-A, Ce-B et un collecteur de sortie Cs-A, Cs-B distincts. Des lignes d'alimentation 220 comportent des conduits 221A, 221B reliant l'orifice d'entrée 11 aux collecteurs d'entrée Ce-A, Ce-B et comportent au moins un commutateur sélectif autorisant ou bloquant l'écoulement entre l'orifice d'entrée vers chacun des collecteurs d'entrée et ainsi alimenter un premier groupe différent d'une étape d'alimentation à l'autre. Ce commutateur sélectif est donc adapté à alimenter un premier groupe différent d'une étape d'alimentation à l'autre. Dans cet exemple, deux vannes d'entrée 222A, 222B sont prévues entre l'orifice d'entrée 11 et les collecteurs d'entrée Ce-A, Ce-B.

La pile 210 comporte également des lignes de distribution fluidique 230 adaptées à assurer la communication fluidique des groupes entre eux. Dans cet exemple, les collecteurs de sortie Cs-A, Cs-B étant distincts les uns des autres, les lignes de distribution fluidique comportent deux conduits de distribution 231A, 231B agencés pour relier le collecteur de sortie Cs-B, Cs-A d'un groupe au collecteur d'entrée Ce-A, Ce-B du groupe voisin, et inversement, de sorte que du fluide circulant dans un groupe puisse s'écouler en direction du deuxième. Chaque conduit de distribution 231A, 231B est muni d'une vanne 232A, 232B autorisant ou bloquant l'écoulement fluidique dans le conduit.

La pile comporte un dispositif d'évacuation 240 reliant au moins un dernier groupe du chemin fluidique à l'orifice de sortie 12 et adapté à assurer l'évacuation continue de fluide présent dans ce groupe lorsqu'un autre groupe est alimenté. Dans cet exemple, le dispositif d'évacuation 240 relie le collecteur de sortie Cs-A du groupe A à l'orifice de sortie 12 par un conduit d'évacuation 241A ici muni d'une vanne 242A, ainsi que le collecteur de sortie Cs-B du groupe B à l'orifice de sortie 12 par un conduit d'évacuation 241B ici muni d'une vanne 242B. Dans cet exemple, le dispositif d'évacuation est ici adapté à permettre la purge de la pile.

Les figures 8a à 8e illustrent schématiquement l'évolution temporelle de la répartition spatiale de la fraction molaire d'espèce réactive le long du chemin fluidique entre une étape d'alimentation suivie d'une étape de purge, dans la pile décrite en référence à la figure 7. Ici également, et seulement à titre d'exemple, on considère que le fluide d'alimentation est de l'air atmosphérique injecté via l'orifice d'entrée 11 avec une sur-stoechiométrie égale à 2, c'est-à-dire que le débit molaire d'oxygène injecté via l'orifice d'entrée 11 est quatre fois supérieur au débit molaire oxygène consommé par les cathodes dans chaque groupe de cellule. Le débit molaire d'air (hors vapeur d'eau) injecté via l'orifice d'entrée 11 est lui-même approximativement cinq fois supérieur au débit molaire d'oxygène injecté, compte tenu de la concentration d'oxygène dans l'air atmosphérique (21%).

La figure 8a est une représentation schématique de la pile à combustible selon le second mode de réalisation décrite en référence à la figure 7, lors d'une étape d'alimentation. La figure 8b est un diagramme illustrant la répartition spatiale le long du chemin fluidique, entre les collecteurs d'entrée et de sortie des groupes A et B de la pile illustrée en figure 8a, de la fraction molaire d'espèce réactive lors de l'étape d'alimentation en régime permanent, c'est-à-dire lorsque la répartition spatiale de la fraction molaire d'espèce réactive le long du chemin fluidique ne varie plus dans le temps.

A la différence de la figure 4a, le sens d'écoulement dans le groupe A est identique à celui dans le groupe B, c'est-à-dire que le fluide d'alimentation est injecté à partir de l'orifice d'entrée 11 dans le groupe A à partir du collecteur Ce-A, la vanne 222A étant ouverte et la vanne 222B étant fermée, ainsi que la vanne de distribution 232A, puis s'écoule jusqu'au collecteur Cs-A, puis, la vanne 242A étant fermée et la vanne 232B étant ouverte, est conduit jusqu'au collecteur d'entrée Ce-B du groupe B puis s'écoule jusqu'au collecteur de sortie Cs-B, et est évacué jusqu'à l'orifice de sortie 12, la vanne 242B étant ouverte. Cela entraîne une répartition spatiale de la fraction molaire d'oxygène qui diminue continûment le long du chemin fluidique, à partir d'une valeur maximale $c_2$, ici de l'ordre de 0,210 au collecteur Ce-A jusqu'à une valeur minimale $c_1$ ici de l'ordre de 0,117 au collecteur Cs-B situé à l'extrémité du chemin fluidique. La répartition spatiale suit ici, à titre purement illustrative, une évolution linéaire mais d'autres évolutions sont possibles. Par ailleurs, on a illustré une étape d'alimentation du groupe A mais la situation est similaire lorsque l'étape d'alimentation porte sur le groupe B.

La figure 8c est une représentation schématique de la pile à combustible selon le second mode de réalisation décrite en référence à la figure 7, lors d'une étape de purge succédant directement à l'étape d'alimentation de la figure 8a. La figure 8d est un diagramme illustrant la répartition spatiale de la fraction molaire d'espèce réactive le long du chemin fluidique, entre les collecteurs d'entrée et de sortie des groupes A et B de la pile illustrée en figure 8c, pour différents instants d'un régime transitoire de l'étape de purge.

En référence à la figure 8c, les deux groupes sont tous alimentés simultanément en espèce réactive à partir de l'orifice d'entrée 11, et le sens d'écoulement dans chacun des groupes est identique à celui qui avait lieu lors de l'étape d'alimentation précédente. Le groupe A reste alimenté par rapport à l'étape d'alimentation précédente, et le groupe B est également alimenté en espèce réactive. Ainsi, le fluide d'alimentation, provenant de l'orifice d'entrée 11, est injecté simultanément dans les collecteurs d'entrée Ce-A et Ce-B, les vannes 222A et 222B étant ouvertes et les vannes 232A et 232B étant fermées. Le fluide s'écoule dans les cellules de chacun des groupes jusqu'au collecteur de sortie commun Cs puis est évacué jusqu'à l'orifice de sortie 12, les vannes 242A et 242B étant ouvertes. A noter cependant que les deux groupes étant alimentés en parallèle, le débit molaire du fluide d'alimentation au niveau de l'orifice d'entrée 11 peut rester constant ou être augmenté par rapport à sa valeur lors de l'étape d'alimentation précédente. A titre d'exemple, on détaille dans les diagrammes de la figure 6d le cas où le débit molaire du fluide d'alimentation à l'orifice d'entrée 11 est sensiblement égal à ce qu'il était lors de l'étape d'alimentation précédente.

En référence à la figure 8d, l'étape de purge débute par un régime transitoire, d'une durée T', dans lequel la répartition spatiale de la fraction molaire d'oxygène varie dans le temps jusqu'à ce qu'un régime permanent s'établisse (à partir de t≥T'). Sur les différents diagrammes, le lieu de l'alimentation est représenté par deux points, situés à $c_2$ au niveau de Ce-A et au niveau de Ce-B, et le sens d'écoulement est illustré par une flèche orientée vers les collecteurs de sortie Cs-A et Cs-B dans les groupes A et B.

Au début de l'étape de purge (fig.8d, t=0), la répartition spatiale le long du chemin fluidique de la fraction molaire d'oxygène est identique à ce qu'elle était en fin d'étape d'alimentation (fig.8b), c'est-à-dire que la fraction molaire d'oxygène à Ce-A est à 0,210 alors qu'elle est, à Ce-B, de 0,166. Lors de cette étape de purge, le débit molaire au niveau des collecteurs d'entrée Ce-A et Ce-B correspond à une sur-stoechiométrie égale à 2, c'est-à-dire que le débit molaire d'oxygène injecté via l'orifice d'entrée 11 est quatre fois supérieur au débit molaire oxygène consommé par les cathodes dans chaque groupe de cellule. Le débit molaire d'oxygène injecté au niveau des collecteurs d'entrée de chaque groupe est égal à la moitié de celui injecté via l'orifice d'entrée 11, ce qui conduit à une valeur $c_2$ identique au collecteur Ce-A mais à une nouvelle valeur $c_2$ au collecteur Ce-B de 0,210.

Dans le groupe A, la répartition spatiale de la fraction molaire d'oxygène s'établit progressivement (fig.8d, de t=0 à t=T'), entre la nouvelle valeur $c_2$ de l'ordre de 0,210 en amont de l'écoulement, au niveau du collecteur Ce-A, jusqu'à la valeur $c_1$ en aval de l'écoulement, au niveau du collecteur de sortie Cs-A, $c_1$ étant de l'ordre de 0,117. Le régime transitoire dure de l'ordre de T'. Seul un point d'inflexion dans la courbe d'évolution spatiale de la fraction molaire est visible. Ce dernier se déplace progressivement du collecteur Ce-A vers le collecteur Cs-A. La fraction molaire d'oxygène en sortie de groupe A passe progressivement de 0,166 à la valeur $c_1$.

Dans le groupe B également, la répartition spatiale de la fraction molaire d'oxygène s'établit progressivement (fig.8d, de t=0 à t=T'), entre la nouvelle valeur $c_2$ de l'ordre de 0,210 en amont de l'écoulement, au niveau du collecteur Ce-B, jusqu'à la valeur $c_1$ en aval de l'écoulement, au niveau du collecteur de sortie Cs-B, $c_1$ étant de l'ordre de 0,117. On note ici l'existence d'une zone présentant une variation localisée de la fraction molaire. Ainsi, à la différence de l'étape de purge décrite en référence à la figure 4d dans laquelle une zone localisée appauvrie P était générée, la zone ne présente ici qu'une faible variation localisée de la fraction molaire, bien inférieure à la chute relative de 50% décrite en référence à la figure 4d.

La figure 8e représente l'évolution temporelle de la fraction molaire d'oxygène moyenne pendant toute la durée de la phase transitoire explicitée sur la figure 8d, de t=0 à t=T'. Dans le groupe de cellules A, la fraction molaire moyenne diminue et reste toujours supérieure à la valeur atteinte lors de la stabilisation, c'est-à-dire environ 0,166. Dans le groupe de cellules B, la fraction molaire moyenne ne fait qu'augmenter pour atteindre également la valeur de stabilisation de 0,166. De telles valeurs de fraction molaire moyenne rendent improbable une chute de performance sensible pour l'un ou l'autre groupe de cellules.

Ainsi, en effectuant de manière systématique une étape de purge des groupes de cellules entre deux étapes d'alimentation sélective successives, et en assurant un sens d'écoulement identique dans les groupes de cellules entre l'étape d'alimentation et l'étape de purge, on évite de générer toute zone localisée appauvrie dans les groupes de cellules. Le procédé d'alimentation selon l'invention, appliqué à la pile à combustible selon le second mode de réalisation, permet ainsi d'éviter toute chute temporaire de tension ou de courant produit par la pile.

Le procédé d'alimentation se poursuit avec une autre étape d'alimentation sélective, au cours de laquelle un premier groupe est directement alimenté, celui-ci étant différent de celui de l'étape d'alimentation précédente, et le dernier groupe, situé à l'extrémité du chemin fluidique, est également différent de celui de l'étape d'alimentation précédente.

On remarque que, lors de l'étape d'alimentation suivante, le sens d'écoulement au niveau du premier groupe alimenté est avantageusement identique au sens d'écoulement ayant eu lieu dans ce même groupe lors de l'étape de purge précédente. Plus précisément, dans le groupe B, le sens d'écoulement lors de l'étape de purge va du collecteur Ce-B vers le collecteur Cs. Lors de l'étape d'alimentation suivante, le groupe B devenant le premier groupe alimenté, le sens d'écoulement est alors identique. Ainsi, il n'y a pas d'inversion du profil de répartition spatiale de la fraction molaire d'espèce réactive, ce qui permet de limitant l'impact de la formation d'une nouvelle zone appauvrie migrant le long du chemin fluidique. L'évolution spatiale du profil de fraction molaire d'espèce réactive dans chaque groupe pendant cette phase transitoire est représentée sur la figure 9a.

En référence à la figure 9a, la phase transitoire d'une durée T ne fait pas apparaître de discontinuité dans le profil de fraction molaire d'espèce réactive dans le groupe de cellules B, mais dans le groupe A une chute brutale apparaît, avec un point minimum P correspondant au départ à la sortie du groupe B, puis se déplaçant de l'entrée Ce-A vers la sortie Cs-A. Un point d'inflexion apparait initialement dans le groupe B, puis se déplacent le long du chemin d'écoulement d'abord jusqu'à la sortie Cs-B, puis de Ce-A à Cs-A. Le minimum est obtenu pour le fluide situé au niveau de Cs-A à t=T/2, avec une valeur de fraction molaire locale de l'ordre de 0,069.

En référence à la figure 9b, la fraction molaire d'oxygène moyenne sur chaque groupe est identique dans chaque groupe de cellules à l'instant t=0. Elle ne fait qu'augmenter pour le groupe de cellules B. En revanche, elle chute pour le groupe A, sans pour autant atteindre la valeur c1, puisque le minimum observé est d'environ 0,120. Cette valeur est suffisamment élevée pour garantir que la chute de performance observée reste très limitée, encore inférieure à celle décrite dans le cas de la figure 6b.

La pile à combustible, décrite précédemment avec deux groupes de cellules, peut comprendre un plus grand nombre de groupes de cellules. Les groupes peuvent alors être alimentés sélectivement, par exemple de manière cyclique, comme décrit dans le brevet FR2975227.

Ainsi, en référence à la figure 10a, dans le cas d'une pile comportant trois groupes de cellules A, B, C dont le collecteur de sortie est commun à chaque groupe, le fluide d'alimentation introduit dans le collecteur d'entrée Ce-A du premier groupe A rejoint le collecteur de sortie commun Cs et peut ensuite s'écouler simultanément dans les deux groupes suivants, à partir du collecteur de sortie commun Cs en direction du collecteur d'entrée Ce-B, Ce-C de chacun des deux groupes B et C. Ainsi, le premier groupe alimenté A est relié en série avec les deux groupes B et C suivants, appelés également derniers groupes, qui sont reliés l'un à l'autre en parallèle. On peut ainsi prévoir un dispositif d'évacuation (non représenté) pour au moins l'un des derniers groupes ou pour chacun des derniers groupes.

Pour limiter la chute de tension décrite précédemment, il est avantageux que l'étape de purge soit réalisée de manière à ce que le fluide s'écoule dans les groupes B et C, dans le même sens que le sens d'écoulement dans ces groupes lors de l'étape d'alimentation précédente. Ainsi, il y a une inversion du sens d'écoulement entre l'étape d'alimentation et l'étape de purge uniquement pour le groupe A et non pas pour les deux groupes B et C, ce qui conduit à une chute de tension locale qu'au niveau du groupe A, permettant ainsi de limiter son impact sur les performances électrochimiques de la pile.

En référence à la figure 10b, la pile comporte trois différents groupes de cellules dont les collecteurs de sortie Cs-A, Cs-B, Cs-C sont distincts. Dans cet exemple, le fluide d'alimentation est introduit dans le collecteur d'entrée Ce-A du groupe A puis rejoint son collecteur de sortie Cs-A, et s'écoule dans un conduit de distribution 331AB jusqu'au collecteur d'entrée Ce-B du groupe B, puis jusqu'à son collecteur de sortie Cs-B, et s'écoule dans un conduit de distribution 331BC jusqu'au collecteur d'entrée Ce-C du groupe C, et enfin jusqu'au collecteur de sortie Cs-C. Ainsi, le sens d'écoulement dans les différents groupes est co-courant d'un groupe à l'autre, c'est-à-dire qu'il s'écoule du collecteur d'entrée vers le collecteur de sortie dans chaque groupe. Il est avantageux que le sens de l'écoulement soit identique, d'une étape d'alimentation à l'autre, pour limiter la présence d'une chute de tension qui migre dans tous les groupes du chemin fluidique. De plus, lorsque l'étape de purge est effectuée de manière à ce que le sens d'écoulement de la purge soit identique au sens d'écoulement de l'étape d'alimentation précédente, on évite ainsi tout effet de chute de tension (comme décrit précédemment).

Des modes de réalisation particuliers viennent d'être décrits. Différentes variantes et modifications apparaîtront à l'homme du métier.

Ainsi, la durée de chaque étape d'alimentation et de purge et la fréquence d'alternance entre les étapes peuvent dépendre de plusieurs critères, par exemple des paramètres de la pile (courant délivré, température...) ; la détection d'un niveau de tension des groupes de cellules en fonction d'un seuil prédéfini et fixe ; la détection d'un niveau de tension des groupes de cellules en fonction d'un seuil prédéfini variant en fonction des paramètres de la pile (courant délivré, température...) ; la détection ou l'estimation de la quantité de polluant au sein de la pile... Les critères peuvent être différents pour chacune des étapes d'alimentation et de purge.

## Revendications

1. Procédé d'alimentation d'une pile à combustible (110 ; 220) en espèce réactive diluée dans un gaz porteur, la pile comportant un empilement de cellules électrochimiques réparties en N groupes (A, B) distincts de cellules, N≥2, dans lequel :

   on effectue une pluralité d'étapes d'alimentation sélective des N groupes (A, B) de cellules en espèce réactive diluée dans le gaz porteur, au cours desquelles on alimente un premier groupe de cellules, l'espèce réactive non consommée dans le premier groupe circulant dans les autres groupes par l'intermédiaire de lignes de distribution (130 ; 230) assurant la communication fluidique des groupes entre eux et étant agencés de manière à former, avec les N groupes, un chemin fluidique pour l'espèce réactive, allant du premier groupe alimenté jusqu'à un ou plusieurs derniers groupes formant l'extrémité du chemin fluidique, le premier groupe alimenté étant différent d'une étape d'alimentation à l'autre,
   **caractérisé en ce que**, à la suite de chacune des étapes d'alimentation, on effectue une étape de purge des N groupes (A, B) de cellules au cours de laquelle on alimente simultanément chacun des groupes en espèce réactive, chaque groupe communiquant avec un orifice de sortie (12) de la pile permettant l'évacuation fluidique des N groupes de cellules.

2. Procédé d'alimentation selon la revendication 1, dans lequel les lignes de distribution fluidique (130 ; 230) sont agencées vis-à-vis des groupes (A, B) de sorte que le sens d'écoulement fluidique de l'espèce réactive dans un dernier groupe lors d'une étape d'alimentation est identique au sens d'écoulement fluidique dans le même groupe lors de l'étape de purge suivante.

3. Procédé d'alimentation selon la revendication 1 ou 2, dans lequel les lignes de distribution fluidique (130, 230) sont agencées vis-à-vis des groupes (A, B) de sorte que le sens d'écoulement fluidique de l'espèce réactive dans chacun des N groupes lors d'une étape d'alimentation est identique au sens d'écoulement fluidique dans les mêmes groupes lors de l'étape de purge suivante.

4. Procédé d'alimentation selon l'une quelconque des revendications 1 à 3, dans lequel les lignes de distribution fluidique (130, 230) sont agencées vis-à-vis des groupes (A, B) de sorte que le sens d'écoulement fluidique de l'espèce réactive dans le ou les derniers groupes lors d'une étape de purge est identique au sens d'écoulement fluidique dans le ou les mêmes groupes lors d'une étape d'alimentation suivante.

5. Procédé d'alimentation selon l'une quelconque des revendications 1 à 4, dans lequel les lignes de distribution fluidique (130, 230) sont agencées vis-à-vis des groupes (A, B) de sorte que le sens d'écoulement fluidique de l'espèce réactive dans chacun des groupes lors d'une étape de purge est identique au sens d'écoulement fluidique dans chacun des mêmes groupes lors d'une étape d'alimentation suivante.

6. Procédé d'alimentation selon l'une quelconque des revendications 1 à 5, dans lequel les cellules comportent chacune une anode et une cathode, les cathodes et/ou les anodes de l'empilement de cellules étant alimentées en espèce réactive diluée dans un fluide porteur.

7. Procédé d'alimentation selon la revendication précédente, dans lequel les cathodes sont alimentées en air atmosphérique contenant de l'oxygène.

8. Procédé d'alimentation selon l'une quelconque des revendications précédentes, dans lequel, lors de ladite étape de purge, le débit molaire en espèce réactive en entrée des groupes de cellules est différent entre au moins deux desdits groupes.

9. Procédé d'alimentation selon la revendication précédente, dans lequel, lors de ladite étape de purge, le débit molaire en espèce réactive en entrée d'un groupe de cellules, celui-ci étant un dernier groupe lors de l'étape d'alimentation précédente, est supérieur à celui d'au moins un autre groupe.

**Patentansprüche**

1. Speisungsverfahren einer Brennstoffzelle mit reaktiver Spezies (110; 220), die in einem Trägergas verdünnt ist, wobei die Brennstoffzelle einen Stapel von elektrochemischen Zellen aufweist, die in N verschiedene Gruppen (A, B) von N ≥ 2 Zellen aufgeteilt ist, wobei:

   mehrere Schritte des selektiven Speisens der N Gruppen (A, B) von Zellen mit reaktiver Spezies, die in dem Trägergas verdünnt ist, durchgeführt werden, in denen eine erste Gruppe von Zellen gespeist wird, wobei die reaktive Spezies, die in der ersten Gruppe nicht verbraucht wird, in den anderen Gruppen über Verteilungsleitungen (130; 230) zirkuliert, die die Fluidverbindung der Gruppen miteinander sicherstellen und derart angeordnet sind, um mit den N Gruppen einen Fluidweg für die reaktive Spezies zu bilden, der von der ersten gespeisten Gruppe bis zu einer oder mehreren letzten Gruppen geht, die das Ende des Fluidweges bilden, wobei die erste gespeiste Gruppe von einem Schritt des Speisens zum anderen verschieden ist, **dadurch gekennzeichnet, dass** nach jedem der Schritte des Speisens ein Schritt des Entleerens der N Gruppen (A, B) von Zellen durchgeführt wird, in dem jede der Gruppen gleichzeitig mit reaktiver Spezies gespeist wird, wobei jede Gruppe mit einer Auslassöffnung (12) der Brennstoffzelle in Verbindung steht, die die Fluidevakuierung der N Gruppen von Zellen ermöglicht.

2. Speisungsverfahren nach Anspruch 1, wobei die Verteilungsleitungen (130; 230) gegenüber von den Gruppen (A, B) derart angeordnet sind, dass die Fluidfließrichtung der reaktiven Spezies in einer letzten Gruppe bei einem Schritt des Speisens mit der Fluidfließrichtung in der gleichen Gruppe bei dem nächsten Schritt des Entleerens ist.

3. Speisungsverfahren nach Anspruch 1 oder 2, wobei die Verteilungsleitungen (130, 230) gegenüber von den Gruppen (A, B) derart angeordnet sind, dass die Fluidfließrichtung der reaktiven Spezies in jeder der N Gruppen bei einem Schritt des Speisens mit der Fluidfließrichtung in den gleichen Gruppen bei dem nächsten Schritt des Entleerens ist.

4. Speisungsverfahren nach einem der Ansprüche 1 bis 3, wobei die Verteilungsleitungen (130, 230) gegenüber von den Gruppen (A, B) derart angeordnet sind, dass die Fluidfließrichtung der reaktiven Spezies in der oder den letzten Gruppen bei einem Schritt des Entleerens mit der Fluidfließrichtung in der oder den gleichen Gruppen bei einem nächsten Schritt des Speisens ist.

5. Speisungsverfahren nach einem der Ansprüche 1 bis 4, wobei die Verteilungsleitungen (130, 230) gegenüber von den Gruppen (A, B) derart angeordnet sind, dass die Fluidfließrichtung der reaktiven Spezies in jeder der Gruppen bei einem Schritt des Entleerens mit der Fluidfließrichtung in jeder der gleichen Gruppen bei einem nächsten Schritt des Speisens ist.

6. Speisungsverfahren nach einem der Ansprüche 1 bis 5, wobei die Zellen jeweils eine Anode und eine Kathode aufweisen, wobei die Kathoden und/oder die Anoden des Stapels von Zellen mit reaktiver Spezies, die in einem Trägergas verdünnt ist, gespeist werden.

7. Speisungsverfahren nach dem vorhergehenden Anspruch, wobei die Kathoden mit atmosphärischer Luft, die Sauerstoff enthält, gespeist werden.

8. Speisungsverfahren nach einem der vorhergehenden Ansprüche, wobei bei dem Schritt des Entleerens der molare Durchfluss an reaktiver Spezies am Eingang der Gruppen von Zellen zwischen mindestens zwei der Gruppen verschieden ist.

9. Speisungsverfahren nach dem vorhergehenden Anspruch, wobei bei dem Schritt des Entleerens der molare Durchfluss an reaktiver Spezies am Eingang von einer Gruppe von Zellen, wobei diese eine letzte Gruppe bei dem vorhergehenden Schritt des Speisens ist, größer als jener von mindestens einer anderen Gruppe ist.

**Claims**

1. Process for supplying a fuel cell (110; 220) with reactive species diluted in a carrier gas, the fuel cell comprising a stack of electrochemical cells divided into N different groups (A, B) of cells, N≥2, in which:

   a plurality of steps of selectively supplying the N groups (A, B) of cells with reactive species diluted in the carrier gas are carried out, during which a first group of cells is supplied, the reactive species not consumed in the first group circulating in the other groups by means of distribution lines (130; 230) that ensure the fluidic communication of the groups with one another and that are arranged so as to form, with the N groups, a fluidic pathway for the reactive species, going from the first group supplied to one or more last groups forming the end of the fluidic pathway, the first group supplied being different from one supply step to the next,
   **characterized in that** following each of the supply steps, a step of purging the N groups (A, B) of cells is carried out during which each of the groups is supplied simultaneously with reactive species, each group communicating with an outlet orifice (12) of the fuel cell that enables the fluidic discharging of the N groups of cells.

2. Supply process according to Claim 1, in which the fluidic distribution lines (130; 230) are arranged with respect to the groups (A, B) so that the direction of fluidic flow of the reactive species in a last group during a supply step is identical to the direction of fluidic flow in the same group during the following purge step.

3. Supply process according to Claim 1 or 2, in which the fluidic distribution lines (130; 230) are arranged with respect to the groups (A, B) so that the direction of fluidic flow of the reactive species in each of the N groups during a supply step is identical to the direction of fluidic flow in the same groups during the following purge step.

4. Supply process according to any one of Claims 1 to 3, in which the fluidic distribution lines (130, 230) are arranged with respect to the groups (A, B) so that the direction of fluidic flow of the reactive species in the last group(s) during a purge step is identical to the direction of fluidic flow in the same group(s) during a following supply step.

5. Supply process according to any one of Claims 1 to 4, in which the fluidic distribution lines (130, 230) are arranged with respect to the groups (A, B) so that the direction of fluidic flow of the reactive species in each of the groups during a purge step is identical to the direction of fluidic flow in each of the same groups during a following supply step.

6. Supply process according to any one of Claims 1 to 5, in which the cells each comprise an anode and cathode, the cathodes and/or the anodes of the stack of cells being supplied with reactive species diluted in a carrier fluid.

7. Supply process according to the preceding claim, in which the cathodes are supplied with atmospheric air containing oxygen.

8. Supply process according to any one of the preceding claims, in which, during said purge step, the molar flow rate of reactive species at the inlet of the groups of cells is different between at least two of said groups.

9. Supply process according to the preceding claim, in which, during said purge step, the molar flow rate of reactive species at the inlet of a group of cells, this group being a last group during the preceding supply step, is greater than that of at least one other group.

**Fig.1**

**Fig.2**

**Fig.3a**

**Fig.3b**

**Fig.3c**

**Fig.3d**

**Fig.3e**

**Fig.4a**

**Fig.4b**

**Fig.4c**

**Fig.4d**

**Fig.4e**

**Fig.5a**

**Fig.5b**

**Fig.6a**

**Fig.6b**

**Fig.7**

**Fig.8a**

**Fig.8b**

**Fig.8c**

**Fig.8d**

**Fig.8e**

**Fig.9a**

**Fig.9b**

**Fig.10a**

**Fig.10b**

**EP 3 109 934 B1**

## RÉFÉRENCES CITÉES DANS LA DESCRIPTION

**Documents brevets cités dans la description**

- WO 2012152623 A
- FR 2975227